# EUROPÄISCHE PATENTSCHRIFT

(11) **EP 2 010 759 B1**
(45) Veröffentlichungstag und Bekanntmachung des Hinweises auf die Patenterteilung: **27.10.2010**
(21) Anmeldenummer: 07727280.5
(22) Anmeldetag: 23.03.2007
(51) Int. Cl.: F01L 1/34

(54) **SYNCHRONISATIONSVORRICHTUNG FÜR EINEN MOTOR**
SYNCHRONIZATION DEVICE FOR AN ENGINE
DISPOSITIF DE SYNCHRONISATION POUR UN MOTEUR

(30) Priorität: 12.04.2006 DE 102006017232
(43) Veröffentlichungstag der Anmeldung: 07.01.2009
(73) Patentinhaber: Schaeffler Technologies GmbH & Co. KG, 91074 Herzogenaurach (DE)
(72) Erfinder: SCHÄFER, Jens, 91074 Herzogenaurach (DE); DELL, Heiko, 71543 Wüstenrot (DE)
(86) Internationale Anmeldenummer: PCT/EP2007/052806
(87) Internationale Veröffentlichungsnummer: WO 2007/118758

(56) Entgegenhaltungen:
- EP-A- 1 630 363
- WO-A-2004/027223
- DE-A1- 19 903 594
- US-A- 5 363 817
- US-A1- 2004 011 311
- US-B1- 6 571 757

## Beschreibung

### Gebiet der Erfindung

Die vorliegende Erfindung betrifft einen Motor. Insbesondere betrifft die vorliegende Erfindung eine Synchronisationsvorrichtung für einen Motor, ein Verfahren zur Synchronisation von Wellen in einem Motor, ein computerlesbares Speichermedium und ein Programmelement.

Ein typischer Anlassvorgang bei heutigen Verbrennungsmotoren dauert etwa eine Sekunde. Allgemeines Bestreben der Automobilhersteller ist es, diese Zeit soweit wie möglich zu verkürzen, da diese z. B. aus NVH Gründen (Noise, Vibration, Harshness, also Geräusch, Vibration und Härte) als störend empfunden wird.

Systeme mit verkürzten Startzeiten erfahren eine erhöhte Marktakzeptanz. Endkunden erwarten beispielsweise beim Ampelstart auch bei einem sog. Stopp-Start System eine ähnliche Agilität wie sie es von konventionellen Fahrzeugen ohne Abstellen des Motors während der Ampelrotphase gewöhnt sind. Dadurch erhöht sich auch die gefühlte Sicherheit.

Aus der Druckschrift DE 10 2004 005 449 A1 ist eine Vorrichtung zum Erkennen der Drehung eines Geberrades einer Brennkraftmaschine bekannt.

Aus der Druckschrift WO 2004/020795 A1 ist eine Steuereinrichtung zum Verstellen des Drehwinkels einer Nockenwelle bekannt.

Die Druckschrift WO 2004/027223 A1 beschreibt eine Phasenverstellvorrichtung mit einem Getriebe zum Verstellen einer Phase zwischen Nocken- und Kurbelwelle, wobei eine höhere Auflösung bezüglich der Position der Nockenwelle erreich wird Ein Erkennungssystem für eine Motordrehung ist aus der Druckschrift US 2006/0042578 A1 bekannt.

Es ist eine Aufgabe der vorliegenden Erfindung, einen Verbrennungsmotors schnell zu starten.

Demgemäß wird eine Synchronisationsvorrichtung für einen Motor, ein Verfahren zur Synchronisation von Wellen in einem Motor, ein computerlesbares Medium und ein Programmelement vorgeschlagen.

Gemäß einem exemplarischen Ausführungsbeispiel der vorliegenden Erfindung wird eine Synchronisationsvorrichtung für einen Motor angegeben. Die Synchronisationsvorrichtung umfasst eine Steuereinrichtung, einen ersten aktiven Sensor und einen zweiten aktiven Sensor. Dabei ist der erste aktive Sensor eingerichtet, die Winkellage einer ersten Welle des Motors zu ermitteln, während der zweite Sensor eingerichtet ist die Winkellage einer zweiten Welle zu ermitteln. Der erste aktive Sensor ist ferner eingerichtet, die ermittelte Winkellage der ersten Welle an die Steuereinrichtung bereitzustellen. Der zweite aktive Sensor ist eingerichtet, die Winkellage der zweiten Welle an die Steuereinrichtung bereitzustellen. Alternativ ist der zweite aktive Sensor eingerichtet die Phasenlage der ersten Welle zu der zweiten Welle zu ermitteln und die ermittelte Phasenlage an die Steuereinrichtung bereitzustellen.

Der erste aktive Sensor und der zweite aktive Sensor sind eingerichtet, eine Wellendrehzahl, die zumindest zwischen einem vorgebbaren Referenzwert für die Wellendrehzahl und dem Wellenstillstand liegt zu erkennen. In anderen Worten bedeutet das, dass der aktive Sensor für die Erkennung für alle in einem Verbrennungsmotor vorkommenden Drehzahlen eingerichtet ist. Dass der aktive Sensor aber insbesondere auch für die Drehzahlerkennung von geringen Drehzahlen, die zwischen einem Motorstillstand, also einer Drehzahl von null, und einem Referenzwert der Drehzahl auftreten können, eingerichtet ist. Außerdem sind der erste aktive Sensor und der zweite aktive Sensor eingerichtet, eine Wellendrehrichtungsumkehr zu erkennen. Eine Welle kann nämlich zwei Drehrichtungen aufweisen. Der aktive Sensor kann folglich die Winkellage zweier Wellen oder die Phasenlage zweier Wellen zueinander erkennen. Diese Erkennung kann in beiden Drehrichtungen einer Achse in gleicher Art und Weise, also drehrichtungsunabhängig, erfolgen. Der aktive Sensor kann dabei auch feststellen, in welche der beiden Richtungen sich die Welle dreht und er kann auch die Winkellage und Phasenlage der beiden Achsen bei langsamen Umdrehungen in die andere Richtung erkennen.

Die Phasenlage kann zusammen mit der Winkellage der ersten Welle genutzt werden um die Winkellage der zweiten Welle zu ermitteln, da zwischen der Winkellage der zweiten Welle und der Phasenlage der zweiten Welle ein Zusammenhang bestehen kann.

Wenn es sich bei der ersten Welle um die Nockenwelle eines Motors handelt und wenn es sich bei der zweiten Welle um die Kurbelwelle eines Motors handelt, kann über die Winkellage der Wellen die Stellung der Kolben in einem Zylinder ermittelt werden. Das bedeutet, dass sich über die Kenntnis der Stellung der Nockenwelle zu der Kurbelwelle bestimmen lässt, in welchen Zylinder eines Motors bei einem Startvorgang der Brennstoff einzuspritzen ist. Anhand der Kurbelwellenlage kann somit bestimmt werden, welcher Zylinder in einem saugenden Zustand ist, d.h. bei welchem Zylinder sich der Kolben von dem Zylinderkopf wegbewegt. Anhand der Nockenwellenlage kann bestimmt werden, welches Ventil zum Ansaugen von Luft geöffnet ist. Dadurch ist der Zylinder bestimmt, in den der Kraftstoff einzuspritzen ist, um den Motorstart zu beschleunigen. Da es sich bei dem Verbrennungszyklus um einen zyklischen Prozess handelt, kann auch die Reihenfolge der Zylinder ermittelt werden, in die bei den folgenden Prozessschritten der Kraftstoff einzuspritzen ist. Ein langwieriger Synchronisationsprozess kann somit vermieden werden.

Die Steuereinrichtung ist eingerichtet, die bereitgestellte Winkellageinformation der ersten Welle und die Information zur Phasenlage der ersten und der zweiten Welle oder die Winkellageninformation der ersten Welle und der zweiten Welle auszuwerten und daraus ein Steuersignal zum Einstellen einer vorgebbaren Phasendifferenz zwischen erster Welle und zweiter Welle bereitzustellen. Die vorgebbare Phasendifferenz kann dabei für einen effizienten Kraftstoffverbrauch vorgebbar sein. Die Steuereinrichtung kann auch die Reihenfolge der Zylinder, in die der Kraftstoff einzuspritzen ist ermitteln.

Ein aktiver Sensor oder eine aktive Wellenzustandseinrichtung kann eingerichtet sein, eine Winkellage einer Welle oder eine Phasendifferenz zwischen einer ersten Welle und einer zweiten Welle direkt zu bestimmen.

Hierbei soll unter einem aktiven Sensor ein Sensor verstanden werden, der eine hohe Phasenauflösung oder Winkellagenauflösung hat. Die Phasenauflösung oder die Winkellagenauflösung eines aktiven Sensors kann beispielsweise 1° betragen und ein aktiver Sensor kann beispielsweise eine Phasenlageänderung oder Winkellagenänderung in Schritten von 0,1 ° erkennen. Durch diese hohe Auflösung kann sich ein aktiver Sensor von einem herkömmlichen Sensor unterscheiden.

Der aktive Sensor kann weitere Kriterien erfüllen. So kann ein aktiver Sensor eine hohe Phasenauflösung von beispielsweise 5°NW, also 5° bezogen auf die Nockenwelle, oder 5°E-Motor, also 5° bezogen auf den Elektromotor, haben. Ferner kann ein aktiver Sensor beispielsweise eine Phasenlageänderung oder eine Winkellagenänderung in Schritten von 0,1 °KW, also 0,1 ° bezogen auf die Kurbelwelle, erkennen.

Ein aktiver Sensor kann auch eine permanente Überwachungsfunktion ermöglichen. Das bedeutet, dass ein aktiver Sensor auch, wenn beispielsweise die Zündung eines Motors ausgeschalten ist, die Überwachung des Phasenunterschiedes oder der Winkellage der ersten Welle und der zweiten Welle ermöglichen kann.

Außerdem kann ein aktiver Sensor langsame Phasenänderungen oder langsame Winkellagenänderungen erkennen und er kann auch Phasenänderungen oder Winkellageänderungen bei langsamen Drehzahlen der ersten Welle und der zweiten Welle erkennen. Folglich können Flanken von einem Geber auch bei einer langsamen Drehzahl einer Welle erkannt werden. Eine langsame Phasenänderung oder eine langsame Änderung einer Winkellage liegt dabei beispielsweise in einem Bereich von 0°KW/min bis 5°KW/min oder in einem Bereich von 0°KW/min bis 10°KW/min. Eine langsame oder niedrige Drehzahl ist beispielsweise eine Drehzahl von 0 U/min bis 50 U/min oder von 0U/min bis 80 U/min. Dabei kann die Drehzahl die Drehzahl einer Welle und insbesondere die Motordrehzahl sein.

Der aktive Sensor kann auch bei einer langsamen Drehzahl die Drehrichtung oder die Drehrichtungsänderung einer Welle erkennen. In anderen Worten erkennt ein aktiver Sensor auch die Rückdrehung einer der ersten Welle und der zweiten Welle.

Der aktive Sensor kann dabei mindestens eines der Kriterien hohe Auflösung, permanente Überwachungsfunktion, Flankenerkennung bei einer niedrigen Drehzahl und Rückdreherkennung aufweisen.

Eine Winkellage kann beispielsweise den Winkel zu einer festen Bezugsposition bezeichnen. Die Winkellage kann über eine Markierung, die in der Bezugsposition angebracht ist, erkannt werden.

Unter dem Zustand einer Welle soll im Rahmen des vorliegenden Textes ein Bewegungszustand einer Welle verstanden werden. Dieser Bewegungszustand kann eine Winkellage einer Welle zu einer bestimmten Zeit, eine Drehgeschwindigkeit, eine bestimmte Anzahl an Impulsen oder eine Phaseninformation einer Welle sein.

Gemäß einem anderen exemplarischen Ausführungsbeispiel der vorliegenden Erfindung wird ein Verfahren zur Synchronisation von Wellen in einem Motor während der Motorstart- oder der Motorstoppphase angegeben. Zunächst wirdeine Winkellage einer ersten Welle mittels eines ersten aktiven Sensors und eine Winkellage einer zweiten Welle mittels eines zweiten aktiven Sensors ermittelt. Die Winkellage der ersten Welle und der zweiten Welle wird einer Steuereinrichtung bereitgestellt. Alternativ zu der Ermittlung der Winkellage der zweiten Welle kann eine Phasenlage zwischen der ersten und der zweiten Welle ermittelt und der Steuereinrichtung bereitgestellt werden. Die Steuereinrichtung ermittelt darauf basierend ein Steuersignal und stellt dieses Steuersignal zum Einstellen einer vorgebbaren Phasendifferenz zwischen der ersten und der zweiten Welle bereit. Das Steuersignal kann zu einer Regelung der Phasendifferenz auf einen Sollwert genutzt werden. Der erste aktive Sensor (215) und der zweite aktive Sensor (218, 220) sind eingerichtet, auch noch eine Wellendrehzahl zwischen einem Referenzwert für die Wellendrehzahl und dem Wellenstillstand zu erkennen. Außerdem sind der erste aktive Sensor (215) und der zweite aktive Sensor (218, 220) eingerichtet, eine Wellendrehrichtungsumkehr zu erkennen.

Gemäß noch einem anderen Ausführungsbeispiel der vorliegenden Erfindung wird ein computerlesbares Medium angegeben, auf dem ein Programm gespeichert ist, welches Programm, wenn es von einem Prozessor ausgeführt wird, die oben angegebenen Verfahrensschritte steuert.

Gemäß noch einem anderen Ausführungsbeispiel der vorliegenden Erfindung wird ein Programmelement zum Synchronisieren von Wellen angegeben, welches Programmelement, wenn es von einem Prozessor ausgeführt oder abgearbeitet wird, die oben angegebenen Verfahrensschritte steuert.

Mittels der vorliegenden Erfindung kann ein Phasendifferenzsignal als Steuersignal erzeugt werden, das als Ansteuersignal zum Einstellen eines Phasenunterschieds zwischen zwei Wellen genutzt werden kann. Eine der beiden Wellen kann eine Nockenwelle eines Verbrennungsmotors sein und die andere Welle kann eine Kurbelwelle eines Verbrennungsmotors sein.

Die Startdauer eines Verbrennungsmotors kann beispielsweise eine Sekunde betragen, wobei diese Startdauer aus einem Zeitanteil für die Synchronisation eines Steuergerätes und dem eigentlichen Anlassvorgang, bei dem es zu Zündungen des Motors kommt, zusammengesetzt sein kann. Ein Startvorgang kann bei einem Stopp-Start System auftreten, wenn während einer Ampelrotphase der Motor abgestellt wird.

Ein Grund für das Abstellen des Motors kann die Verringerung des Kraftstoffverbrauches oder die Verringerung des Schadstoffausstoßes sein. Insbesondere bei Hybridfahrzeugen kann der Motor bei einem Stillstand des Fahrzeuges, wie er beispielsweise bei einer Ampelrotphase gegeben ist, abzustellen sein, um ihn danach möglichst schnell zu starten.

Ein Stopp-Start System ist ein System, das automatisch erkennt, dass sich ein Motor und insbesondere ein Fahrzeug oder Auto mit einem Motor in einer Stopphase befindet. Das Stopp-Start System kann automatisch den Motor abstellen, wenn die Stoppphase beispielsweise an einer Verringerung der Motordrehzahl erkannt wird. Sobald sich das Fahrzeug wieder in Bewegung setzt, kann das Stopp-Start System einen erneuten Motorstart ausführen.

Zum Starten kann es nötig sein, dass die Kurbelwelle des Motors mit der Nockenwelle des Motors synchronisiert wird. Durch die Synchronisation kann der Verlauf einer Verbrennung im in einem Verbrennungsmotor beeinflusst werden. Es kann somit durch die Synchronisation eine vorgebbare Öffnung und Schließung der Ventile erreicht werden. Dadurch kann der Startvorgang hinsichtlich beispielsweise Emissionen, Verbrauch und der Last beeinflusst werden. Die Synchronisation kann mittels eines Steuergerätes erfolgen. Eine Synchronität zwischen der Kurbelwelle und der Nockenwelle kann gegeben sein, wenn eine vorgegebene Zuordnung d.h. ein Bezug der Kurbelwellenposition und der Nockenwellenposition erreicht ist.

Zum Zuordnen der Kurbelwellenposition und der Nockenwellenposition kann der Zustand oder die Winkellage der ersten Welle und der Zustand oder die Winkellage der zweiten Welle herangezogen werden. Beispielsweise kann die Zuordnung der Kurbelwellenposition und der Nockenwellenposition nach einer Detektion von charakteristischen Merkmalen an der Nockenwelle oder der Kurbelwelle festgestellt werden. Charakteristische Merkmale, die sich auf einer Welle befinden können, können beispielsweise fehlende Zähne eines Geberrades (z.B. 60-2 Zähne), insbesondere eines Geberzahnrades oder Sensorzielrades oder eine Flankenerkennung an Geberrädern, sein. Es kann beispielsweise auch eine halbmondförmige Kennung an einer Welle angebracht sein, um einen Winkel der Welle zu bestimmten.

Der Abstellvorgang eines Verbrennungsmotors kann großen Streuungen unterliegen. Das bedeutet, dass beim Abstellen des Motors in der Stopphase die Abstellposition eines Kolbens stochastisch ist. Das kann bedeuten, dass die exakte Lage des Kolbens und somit der Winkel der mit dem Kolben verbundenen Kurbelwelle möglicherweise nicht vorhersehbar ist. Beispielsweise kann in einem Zylinder des Verbrennungsmotors, in dem ein Kolben geführt ist, noch bis zu ca. einer Sekunde nach dem Motorabstellen ein hoher Druck vorhanden sein. Nach dem Abstellen des Motors kann der Motor eine Motordrehzahl von 0 Umdrehungen pro Minute (U/min oder min⁻¹) aufweisen. Der noch vorhandene Druck in dem Kolben kann jedoch zu einem unkontrollierten Entspannvorgang durch ein Nachdrehen der Kurbelwelle führen, wodurch ein erneutes Synchronisieren erforderlich werden kann.

So kann sich die Kurbelwelle beispielsweise im letzten Abschnitt des Abstellvorgangs sogar zurückdrehen. D. h. im letzten Abschnitt des Abstellvorgangs kann die Drehung der Kurbelwelle in einer Richtung erfolgen, die der Richtung, die beim Betrieb des Motors üblich ist, entgegengesetzt ist. Die Rückdrehung kann einen Wert von beispielsweise 50 bis 70 Grad KW (Grad Kurbelwelle) betragen. Dabei bedeutet ein Grad KW eine Drehung der Kurbelwelle um ein Grad gegenüber einer Bezugsposition.

Aufgrund der beim Abstellvorgang auftretenden geringen Drehzahlen der Kurbel- bzw. Nockenwelle kann es vorkommen, dass herkömmliche Kurbelwellensensoren die Drehung, insbesondere die Rückdrehung der Kurbelwelle nicht detektieren können. Bei geringen Drehzahlen im Bereich von null Umdrehungen pro Minute (U/min) können folglich herkömmliche Kurbelwellensensoren blind sein, d.h. trotz einer vorhandenen Drehbewegung keine Drehbewegung der Welle erkennen.

Mittels der Synchronisationsvorrichtung kann mit dem ersten Sensor, mit dem zweiten Sensor und mit dem Steuergerätedesign, insbesondere der Steuereinrichtung, eine Winkelposition auch während eines Motorstillstandes verfolgt werden. Es kann beispielsweise vermieden werden, dass während der Motorstopphase die Synchronisation oder Synchronität zwischen der ersten Welle und der zweiten Welle, insbesondere die Synchronisation zwischen der Kurbelwelle und der Nockenwelle, verloren geht.

Um den Verlust der Synchronisation zu vermeiden, kann der erste aktive Sensor und der zweite aktive Sensor die Winkelposition, die ein Beispiel für einen Zustand einer Welle sein kann, auch während der Motorstopphase ermitteln. Die aktiven Sensoren können auch das Rückdrehen von der Kurbelwelle oder der Nockenwelle erkennen. Das Rückdrehen der Kurbelwelle und der Nockenwelle kann insbesondere bei Otto-Motoren unterschiedliche Beträge aufweisen.

Der erste aktive Sensor und der zweite aktive Sensor können derart eingerichtet sein, um auch während einer Motorstopphase, d. h. bei einer Wellendrehung von im Wesentlichen null Umdrehungen pro Minute, den Zustand der Wellen an die Steuereinrichtung weiterleiten zu können. Dadurch kann die Synchronisation der Nockenwelle und der Kurbelwelle, auch während einer Motorstopphase aufrechterhalten bleiben. Folglich kann die Zeitdauer für die Synchronisation der Nockenwelle und der Kurbelwelle und die Synchronisation des Steuergeräts, insbesondere der Steuereinrichtung, für alle folgenden Motorstarts entfallen.

Auch während einer längeren Abstelldauer bzw. Motorstopphase kann die Synchronisation aufrechterhalten bleiben, wodurch auch der initiale Motorstart ohne die Zeitdauer für eine Synchronisation erfolgen kann. Unter einem initialen Motorstart ist dabei zu verstehen, dass der Motor unter Abschaltung der Zündung ausgeschalten worden ist. Ein initialer Motorstart kann beispielsweise nach einem Parkvorgang nötig sein.

Während dieser Unterbrechungsphase kann jedoch die Synchronisationsvorrichtung oder die Steuereinrichtung, weiter für die Synchronisation der Wellen sorgen. Dazu kann es jedoch nötig sein, auch währenddem der Motor abgestellt ist die Steuereinrichtung mit Energie zu versorgen. Das Aufrechterhalten der Synchronisation oder Synchronität kann beispielsweise mittels EVT-Komponenten (Electromechanical Valve Timing) erfolgen. Im Gegensatz zu einem hydraulischen Nockenwellenverstellsystem kann bei einem EVT-System die Verstellung der Nockenwelle gegenüber der Kurbelwelle mittels eines Elektromotors erfolgen.

Durch die Synchronisation kann die Nockenwelle und die Kurbelwelle derart aufeinander abgestellt werden, dass ein Start des Motors bei dem ersten Zündvorgang beschleunigt erfolgen kann. Dadurch kann auch die Dauer des Motorstarts für Folgestarts etwa halbiert werden. Das bedeutet, dass bei einer normalen Startdauer von einer Sekunde der Startvorgang eines Systems oder eines Verbrennungsmotors mittels einer Synchronisationsvorrichtung auf ca. 0,5 Sekunden verringert werden kann.

Die Synchronisationsvorrichtung für den Motor umfasst einen ersten aktiven Snsor, der eingerichtet ist, die Winkellage einer ersten Welle zu erfassen, einen zweiten aktiven Sensor, welcher eingerichtet ist, die Winkellage einer zweiten Welle zu erfassen und eine Steuereinrichtung. Dabei ist die der erste aktive Sensor eingerichtet der Steuereinrichtung die Winkellage der ersten Welle bereitzustellen und der zweite Sensor ist eingerichtet, der Steuereinrichtung die Winkellage der zweiten Welle bereitzustellen. Die Steuereinrichtung ist eingerichtet, um die von den aktiven Sensoren empfangene Winkellageinformation auszuwerten und ein Steuersignal zum Einstellen einer vorgebbaren Phasendifferenz zwischen der ersten Welle und der zweiten Welle bereitzustellen.

Ein Zustand einer Welle oder der Zustand einer Phasenlage zwischen zwei Wellen kann beispielsweise magnetisch, optisch oder elektrisch mit einem entsprechenden Sensor erfasst werden. Der Zustand kann auch indirekt über einen Druck in einem Zylinder eines Motors oder über Klopfsignale eines Motors erfasst werden.

Gemäß einem weiteren exemplarischen Ausführungsbeispiel der vorliegenden Erfindung sind der erste aktive Sensor und der zweite aktive Sensor ferner derart eingerichtet, während einer Stopphase einer Drehung der ersten Welle und der zweiten Welle eine permanente Überwachung der Winkellage der ersten Welle und der Winkellage der zweiten Welle oder der Phasenlage der ersten Welle zu der zweiten Welle zu ermöglichen.

Folglich kann die Synchronität der Winkellagen der ersten Welle zu der Winkellage der zweiten Welle auch bei einem Stillstand überwacht werden.

Gemäß einem weiteren exemplarischen Ausführungsbeispiel der vorliegenden Erfindung weist die Synchronisationsvorrichtung einen dritten Sensor auf, wobei der dritte Sensor eingerichtet ist, die Winkellage einer dritten Welle zu ermitteln. Der dritte Sensor ist dabei derart eingerichtet, die ermittelte Information über die Winkellage der dritten Welle der Steuereinrichtung bereitzustellen.

Die Ermittlung der Winkellage kann mittels einer Messung aber auch mittels einer Berechnung aus bekannten Abhängigkeiten in Verbindung mit einer anderen gemessenen Größe erfolgen. So kann die Winkellage anhand einer Anzahl von Flanken oder über ein Übersetzungsverhältnis bestimmt werden. Der dritte Sensor kann die Genauigkeit der Bestimmung der Winkellage erhöhen und kann als passiver oder aktiver Sensor ausgebildet sein. Es kann dabei auf einen an einer Welle bereits vorhandenen Sensor zurückgegriffen werden.

Ferner ist der dritte Sensor gemäß einem weiteren Ausführngsbeispiel der vorliegenden Erfindung ein aktiver Sensor.

Gemäß einem anderen exemplarischen Ausführungsbeispiel der vorliegenden Erfindung wird eine Synchronisationsvorrichtung angegeben, die ein Verstellelement umfasst, welches mit einer dritten Welle gekoppelt ist. Die dritte Welle ist dabei mit der ersten und der zweiten Welle kinematisch gekoppelt. Dabei ist das Verstellelement und insbesondere die kinematische Kopplung derart eingerichtet, dass der vorgebbare Phasenwinkel oder die vorgebbare Phasendiffernz mittels Beschleunigen oder Abbremsen der dritten Welle einstellbar ist.

Die erste Welle, die zweite Welle und die dritte Welle können beispielsweise Wellen eines Planetengetriebes sein, wodurch eine kinematische Kopplung erreicht werden kann. Dabei kann über an den Wellen angebrachte Zahnräder eine Kopplung der Wellen untereinander erfolgen. Das Verhältnis von Drehgeschwindigkeiten der entsprechenden Wellen, der Zähnezahl oder des Umfanges wird durch das Übersetzungsverhältnis bestimmt. Das Übersetzungsverhältnisse, also das Verhältnis zu der Zahnzahl der Zahnräder des Planetengetriebes bzw. der Drehgeschwindigkeiten der Wellen zueinander, kann über eine Getriebegrundgleichung ermittelt werden.

Durch das Bereitstellen der Zustandsinformation oder der Winkellage der dritten Welle kann eine Phasendifferenz der ersten Welle zu der zweiten Welle ermittelt werden, auch wenn nur auf einer der ersten Welle oder der zweiten Welle ein aktiver Sensor angeordnet ist. Die drei Wellen können nämlich Teil eines Dreiwellengetriebes mit einem festen Übersetzungsverhältnis sein. Bei den drei Wellen kann es sich um die Kurbelwelle eines Motors, die Nockenwelle eines Motors oder die Verstellwelle eines EVT-Systems handeln. Die Zuordnung der Wellen zueinander kann dabei beliebig erfolgen. Ein EVT-System ist dabei derart eingerichtet, dass mittels einer Drehung an der Verstellwelle eine Phasenwinkel zwischen der Kurbelwelle und der Nockenwelle eingestellt werden kann. Die Verstellung der Verstellwelle kann auch mittels eines Elektromotors erfolgen.

Die Winkellage der dritten Welle kann auch mit einem Hilfssensor erfasst werden. Ein Hilfssensor kann den Zustand einer Welle abseits der Welle ermitteln. Das bedeutet, dass der Hilfssensor zum Ermitteln des Zustandes der Welle nicht direkt auf die Welle zugreift, deren Zustand ermittelt werden soll, sondern den Zustand der Welle über ein transferiertes Wellenmerkmal ermitteln kann. Der Hilfssensor kann auch an der gleichen Welle wie ein Hauptsensor, beispielsweise der erste aktive Sensor oder der zweite aktive Sensor, angeordnet sein. Dabei kann der Hilfssensor parallel oder in Ergänzung zu einem anderen Sensor angeordnet sein. Der Hilfssensor kann zusätzliche Informationen über den Zustand der Welle sammeln.

Der erste aktive Sensor, der zweite aktive Sensor und der dritte Sensor können einen oder eine Vielzahl an Sensoren oder Sensorelementen aufweisen, wobei die Verwendung einer Vielzahl von Sensoren an einer Welle die Genauigkeit der bereitgestellten Information erhöhen kann. Es kann auch eine Kombination von aktiven Sensoren und passiven Sensoren eingesetzt werden. So kann beispielsweise mittels drei Hallsensoren, die in einem Elektromotor sequentiell angeordnet sind und die von den Permantentmagneten des Elektromotors erregt werden, die Drehrichtung einer an dem Elektromotor angeschlossenen Welle erkannt werden. Die drei Sensoren können dabei als ein zusammengehöriger Sensor betrachtet werden.

Gemäß noch einem anderen Ausführungsbeispiel der vorliegenden Erfindung wird eine Synchronisationsvorrichtung angegeben, wobei das Verstellelement eingerichtet ist mittels der dritten Welle die Phasendifferenz zwischen der ersten Welle und der zweiten Welle einzustellen.

Das bedeutet, dass der Versteller oder das Verstellelement nicht direkt auf die erste Welle und die zweite Welle einwirkt, um eine Phasendifferenz zwischen der ersten Welle und der zweiten Welle einzustellen, sondern dass das Verstellelement auch auf eine mit der ersten Welle und der zweiten Welle gekoppelte Welle zugreifen kann.

Gemäß noch einem anderen Ausführungsbeispiel der vorliegenden Erfindung wird eine Synchronisationsvorrichtung angegeben, wobei das Verstellelement als Elektromotor ausgebildet ist.

Dabei kann der Elektromotor einen ersten Betriebszustand aufweisen, in dem der Elektromotor eine elektrische Energie in eine Kraft umwandelt. In diesem ersten Betriebszustand agiert der Elektromotor als Aktor.

Ferner kann der Elektromotor einen zweiten Betriebszustand aufweisen, in dem der Elektromotor dem System, das einen Verbrennungsmotor, eine erste Welle und eine zweite Welle aufweist, Energie entzieht. Zum Energieentzug kann der Elektromotor als Bremse arbeiten. Dabei wird die Drehbewegung einer Welle gebremst. Der Elektromotor arbeitet folglich als Generator.

Die dritte Welle kann sowohl ein Verstellelement als auch einen Sensor aufweisen. Das Verstellelement und der Sensor können in einem Element einstückig zusammengefasst sein.

In anderen Worten bedeutet das, dass mittels des ersten aktiven Sensors und des zweiten aktiven Sensors der Zustand der ersten Welle und der Zustand der zweiten Welle ermittelt werden kann und mittels einer weiteren Welle die Phasendifferenz zwischen der ersten Welle und der zweiten Welle eingestellt werden kann. Andererseits kann mittels der Kombination des ersten aktiven Sensors und des dritten Sensors oder der Kombination des zweiten aktiven Sensors mit dem dritten Sensor der Zustand der ersten und der zweiten Welle ermittelt werden. Die Phaseneinstellung zwischen der ersten Welle und der zweiten Welle kann ebenfalls mittels der dritten Welle erfolgen.

Gemäß noch einem anderen Ausführungsbeispiel der vorliegenden Erfindung kann eine Energiezufuhr zu dem Verstellelement oder der Phaseneinstelleinrichtung begrenzt werden.

Das Verstellelement kann Energie benötigen, um die Phasendifferenz zwischen der ersten Welle und der zweite Welle einzustellen. Bei dieser Energie kann es sich um eine elektrische Energie bzw. um eine elektrische Leistung handeln. Beim Einsatz eines Verbrennungsmotors in einem Kraftfahrzeug kann die Versorgung des Verstellelements über das Bordstromnetz erfolgen. Abhängig von der für die Verstellung aufzubringende Kraft kann eine entsprechend hohe Energie gefordert sein. Dadurch könnte die gesamte im Bordstromnetz gespeicherte Energie für die Verstellung aufgebracht werden.

Bei der Verstellung des Verstellelements oder der Phaseneinstelleinrichtung kann es folglich notwendig sein, dass die zugeführte Energie begrenzt wird. Hierbei können dynamische und statische Begrenzungen möglich sein. Nachfolgend soll der Unterschied zwischen einer statischen und einer dynamischen Begrenzung erklärt werden.

Unter einer statischen Begrenzung soll hier verstanden werden, dass die Begrenzung der eingebrachten Leistung (z. B. elektrische Leistung als Produkt aus dem Strom und der Spannung U x I) auf einen statischen Wert begrenzt wird. Das bedeutet, dass der statische Wert nicht in Abhängigkeit einer anderen Größe verändert wird, sondern dass er statisch festgelegt ist. Die statische Begrenzung kann beispielsweise durch ein festes Tastverhältnis bei einer mittels einer PWM (Pulsweitenmodulation) betriebenen Leistungsversorgung für einen Elektromotor, eine Phasenverstelleinrichtung oder Phaseneinstelleinrichtung festgelegt werden. Die elektrische Leistung lässt sich statisch beispielsweise auch durch das Festlegen eines maximal zulässigen Stromes bestimmen.

Bei einer dynamischen Begrenzung kann die in das Verstellelement oder die Phaseneinstelleinrichtung eingebrachte Leistung in Abhängigkeit einer Funktion oder einer anderen Größe verändert werden. Die Begrenzung kann beispielsweise linear in Abhängigkeit der Zeit oder als Funktion n-ter Ordnung von anderen extern gemessenen oder intern berechneten Größen erfolgen. So kann beispielsweise die Leistungsversorgung ein auf einen vollen Batteriestand bezogener relativer Spannungspegel der Bordnetzversorgung sein.

Sowohl bei einer statischen Begrenzung als auch bei einer dynamischen Begrenzung kann auch eine Begrenzung auf Null, also keine Leistung, erfolgen.

In anderen Worten wird eine Synchronisationsvorrichtung angegeben, wobei zumindest der erste Sensor und der zweite Sensor ein aktiver Sensor ist.

Hierbei soll unter einem aktiven Sensor ein Sensor verstanden werden, der mehrere Kriterien erfüllen kann. Ein aktiver Sensor kann eine hohe Auflösung haben. Unter einer hohen Auflösung soll verstanden werden, dass ein aktiver Sensor beispielsweise acht oder mehr als acht Flanken bei einer Wellenumdrehung ermittelt. Unter einer hohen Auflösung können auch beispielsweise 60 Zähne eines an einer Welle angebrachten Zahnrades verstanden werden, wobei das Zahnrad auch Lücken aufweisen kann.

Ein aktiver Sensor kann auch eine permanente Überwachungsfunktion bereitstellen. Das bedeutet, dass ein aktiver Sensor auch ohne dem Vorhandensein einer Energie, beispielsweise wenn die Zündung eines Motors ausgeschalten ist, der Überwachung der Welle oder der Bereitstellung des Zustandes einer Welle dienen kann. Somit kann beispielsweise vermieden werden, dass beim Abstellen des Motors ein Phasenunterschied zwischen der Kurbelwelle und der Nockenwelle entsteht. Eine Phasenverschiebung im abgestellten Zustand zwischen der Kurbelwelle und der Nockenwelle könnte entstehen, wenn ein Auto mit einem Verbrennungsmotor mit eingelegtem Gang angeschoben wird und durch einen abgeschalteten Sensor die Verdrehung einer Welle oder der Wellen zueinander nicht erkannt wird.

Ein aktiver Sensor kann außerdem eine Flankenerkennung bei einer Drehzahl, die gegen null Umdrehung pro Minute geht, erkennen. D. h., dass bei langsamen Umdrehungen von einem aktiven Sensor immer noch der Zustand der Welle erkannt werden kann.

Darüber hinaus kann ein aktiver Sensor auch die Rückdrehung einer Welle erkennen. Unter einer Rückdrehung kann verstanden werden, dass sich im Betrieb die Welle eines Motors zunächst in eine Richtung bewegt, wohingegen die Welle beim Abstellen des Motors und bei langsamen Drehzahlen in die entgegengesetzte Richtung gedreht wird. Ein aktiver Sensor kann auch das permanente Überwachen des relativen Verstellwinkels zwischen der Kurbelwelle und der Nockenwelle während des Stopp-Start Betriebes ermöglichen.

Im Gegensatz zu einem aktiven Sensor soll ein passiver Sensor einen Sensor bezeichnen, der im Wesentlichen keine Rückdreherkennung besitzt und der eine Drehzahl, die gegen null Umdrehungen pro Minute geht, nicht erfassen kann. Somit ist ein passiver Sensor für niedrige Drehzahlen quasi blind. Eine niedrige, geringe oder langsame Drehzahl ist beispielsweise eine Drehzahl zwischen 0 Umdrehungen/min und 50 Umdrehungen/min.

Zusätzlich zu dem ersten aktiven Sensor und dem zweiten aktiven Sensor kann zumindest ein weiterer passiver Sensor eingesetzt werden.

Gemäß einem weiteren exemplarischen Ausführungsbeispiel der vorliegenden Erfindung umfasst das Verstellelement einen Sensor, wobei der Sensor ausgewählt ist aus der Gruppe, bestehend aus dem ersten aktiven Sensor, dem zweiten aktiven Sensor und dem dritten Sensor.

Gemäß noch einem anderen Ausführungsbeispiel der vorliegenden Erfindung wird eine Synchronisationsvorrichtung angegeben, die ferner eine Phasenhalteeinrichtung aufweist, welche eingerichtet ist, die vorgebbare Phasendifferenz zwischen der ersten Welle und der zweiten Welle aufrechtzuerhalten. Alternativ oder auch parallel zum Einregeln des Phasenwinkels mittels der Synchronisationsvorrichtung und durch das Verstellelement bzw. die Phaseneinstelleinrichtung während der gesamten Stopp- und Startphase können auch noch andere Maßnahmen zum Halten oder zum geregelten Verstellen der Phase erfolgen. Beispielsweise kann eine Phasenhalteeinrichtung eine mechanische Verriegelung des Verstellmechanismus bewirken.

Z. B. kann bei dem Motorstop eine mechanische Verriegelung und ein Festhalten des Phasenversatzes zwischen der ersten Welle und der zweiten Welle erfolgen. Somit kann beispielsweise vermieden werden, dass durch das Anschieben eines abgestellten Fahrzeuges eine Phasenverschiebung zwischen der ersten und der zweiten Welle erfolgen kann.

Darüber hinaus ist es möglich, den Versteller, die Phaseneinstelleinrichtung oder die Phasenverstelleinrichtung, die als ein Elektromotor ausgebildet sein können, zu verklemmen.

Das Halten der Phase oder der Phasenlage kann ebenfalls durch das Vorspannen mittels Selbsthaltung erfolgen. Dabei wird eine Welle beispielsweise gegen einen Anschlag gedrückt und kann am Drehen gehindert werden. Eine weitere Möglichkeit zum Halten der Phase kann durch den Einbau einer aktiven Bremse erzielt werden, die nach dem Einstellen der vorgegebenen Phasendifferenz festgezogen werden und so das Aufrechterhalten einer festen Phasenverschiebung gewährleisten kann.

Gemäß noch einem anderen Ausführungsbeispiel der Erfindung ist das Verstellelement ausgebildet bei einem Motorabstellvorgang eine Phasendifferenz zwischen der ersten und der zweiten Welle einzustellen.

Somit kann beim finalen Abstellen eines Motors eine gewünschte Phasendifferenz zwischen der ersten Welle und der zweiten Welle eingestellt werden. Dazu kann beispielsweise eine Phasenhalteeinrichtung herangezogen werden und so die für den nach dem finalen Abstellen des Motors erfolgten initialen Motorstart gewünschte Phasendifferenz zur Verfügung stellen. Folglich kann der initiale Motorstartvorgang beschleunigt werden. Alternativ kann vorgesehen sein, dass über die Zeitdauer des Abstellvorgangs die Phasendifferenz mittels des Verstellelements bzw. der Phaseneinstelleinrichtung konstant gehalten oder konstant geregelt wird.

Gemäß noch einem anderen Ausführungsbeispiel der Erfindung wird eine Synchronisationsvorrichtung angegeben, die ab einer Motordrehzahl aktiviert wird, die zwischen der Referenzdrehzahl des Motors und dem Motorstillstand liegt. Die Motordrehzahl kann dabei indirekt über die Bestimmung einer Wellendrehzahl ermittelt werden.

Zum Einstellen einer Phasendifferenz zwischen der ersten und der zweiten Welle kann es nötig sein, Energie bereitzustellen. Um nicht während der gesamten Betriebszeit Energie zur Regelung der Phasenlage zwischen der ersten Welle und der zweiten Welle aufzubringen, kann eine Einschaltung der Synchronisationsvorrichtung erst ab einer geringen oder niedrigen Motordrehzahl erfolgen. Eine geringe Motordrehzahl kann dabei eine Drehzahl im Bereich von null Umdrehungen pro Minute bis zu der Referenzdrehzahl oder dem Referenzwert der Drehzahl sein. Somit kann erst im Bereich des Abstellens des Motors eine günstige Phasendifferenz für den nächsten Start zwischen Kurbelwelle und Nockenwelle eingestellt werden.

Ein Verstellelement kann nicht nur als Aktor zum Verstellen einer Phasendifferenz eingesetzt werden, sondern mittels eines Verstellelements oder eines Elektromotors kann auch der Zustand oder die Bewegung einer Welle ermittelt werden. Dazu kann beispielsweise bei einem kommutatorlosen Motor oder Elektromotor, d.h. einem Motor ohne Kommutator, ein induktiver Strom in den Motorwindungen herangezogen werden, wodurch das Verstellelement als aktiver Sensor eingerichtet werden kann.

Gemäß noch einem anderen Ausführungsbeispiel der vorliegenden Erfindung kann das Verstellelement oder der Elektromotor eine Vielzahl von Sensorelementen aufweisen. Somit lässt sich mittels der Phasenverstelleinrichtung ein Rückdrehen einer Welle erkennen. Ein kommutatorloser Elektromotor kann Permanentmagneten aufweisen. Die Permanentmagnete können Hallsensoren, die an dem Elektromotor angeordnet sind, in einer bestimmten Reihenfolge erregen. Die Reihenfolge kann von einer Steuereinrichtung ausgewertet werden und so lässt sich die Bewegungsrichtung des Motors bestimmen. Außerdem kann die Auflösung eines Sensors verfeinert werden, indem statt einem Sensor mehrere Sensoren eingesetzt werden.

Gemäß einem weiteren exemplarischen Ausführungsbeispiel der vorliegenden Erfindung wird eine Synchronisationsvorrichtung angegeben, wobei zumindest einer der Sensoren als Magnetfeldsensor ausgebildet ist. Ferner ist es möglich, einen optischen Sensor einzusetzen.

Ein Magnetfeldsensor kann beispielsweise ein Hallsensor oder ein Magnetoresistivsensor (MR-Sensor) sein. Mittels einem Magnetfeldsensor lässt sich eine Flankenerkennung auch bei einer geringen Drehzahl ermöglichen..

Gemäß einem weiteren Ausführungsbeispiel der vorliegenden Erfindung umfasst die Synchronisationsvorrichtung eine Speichereinrichtung, in der eine Information über die Phasendifferenz zwischen der ersten und zweiten Welle gespeichert werden kann.

In einem nicht flüchtigen Speicher kann somit trotz des Abschaltens einer Stromversorgung die gewünschte Phasendifferenz für den nächsten Motorstart abgespeichert und abgerufen werden. Folglich lässt sich schnell die gewünschte Phasendifferenz zwischen den beiden Wellen einstellen und somit der Startvorgang des Motors beschleunigen.

Gemäß einem weiteren Ausführungsbeispiel der vorliegenden Erfindung ist die Phasenhalteeinrichtung ausgebildet, während einer Motor-Abstell-Phase oder Stopp-Start-Phase eine eingestellte Phasendifferenz oder einen eingestellten Phasenwinkel zwischen der ersten Welle und zweiten Welle konstant zu halten.

Zum Halten der Phasendifferenz kann beispielsweise eine mechanische Verriegelung eingesetzt werden. Es kann aber auch mit einer Regelung oder einer Steuereinrichtung in Kombination mit einer Phaseneinstelleinrichtung ein konstanter Phasenwinkel zwischen der ersten Welle und der zweiten Welle aufrechterhalten werden.

Die Motor-Abstell-Phase kann ein Zeitintervall sein, während welchem der Motor durch das Abschalten der Zündung abgestellt ist. Es kann aber mit der Motor-Abstell-Phase auch das Zeitintervall des kurzzeitigen Motor-Abstellens an einer Ampelrotphase oder das "Abwürgen" des Motors bezeichnet sein.

Gemäß einem weiteren exemplarischen Ausführungsbeispiel der vorliegenden Erfindung wird eine Synchronisationsvorrichtung bereitgestellt, welche einen passiven Sensor aufweist. Der passive Sensor ist zusätzlich zu einem des ersten aktiven Sensors und des zweiten aktiven Sensors an zumindest einer der ersten Welle und der zweiten Welle angeordnet.

Der passive Sensor kann die Genauigkeit eines aktiven Sensors erhöhen. So kann beispielsweise die Steuerkette von einem passiven Sensor überwacht werden. Da die Steuerkette aufgrund von Alterungseffekten und Verschleiß gewisse Toleranzen aufweisen kann, die die mit den aktiven Sensoren erfassten Informationen beeinflussen kann, kann beispielsweise mit einem passiven Sensor eine Information ermittelt werden, mit der die Toleranzen ausgeglichen werden können.

Gemäß einem anderen exemplarischen Ausführungsbeispiel der vorliegenden Erfindung ist die Synchronisationsvorrichtung für den Einsatz in einem Bremssystem eingerichtet.

Gemäß noch einem anderen exemplarischen Ausführungsbeispiel der vorliegenden Erfindung ist zumindest einer der Sensoren, beispielsweise des ersten aktiven Sensors, des zweiten aktiven Sensors und des dritten Sensors in dem Nockenwellenversteller integriert.

So kann der Nockenwellenversteller als einen Einheit zusammen mit den Sensoren ausgewechselt werden.

Zuvor wurden viele Ausbildungen der Erfindung bezugnehmend auf eine Synchronisationsvorrichtung beschrieben. Diese Ausgestaltungen gelten in entsprechender Weise auch für das Verfahren zur Synchronisation für Wellen in einem Motor, für das computerlesbare Speichermedium und für das Programmelement.

Anschaulich kann als eine Grundidee der Erfindung gesehen werden, dass durch Beibehalten der Synchronisation oder der Synchronität mittels EVT-Komponenten während der Motorstopphase die Zeitdauer für die Synchronisation des Steuergerätes für alle Motorstarts auch ggf. für den initialen Motorstart entfallen kann. Die Dauer des Motorstarts kann somit für alle Folgestarts gegenüber einem üblichen Startvorgang halbiert werden. Der Aufwand für die Montage einer Synchronisationsvorrichtung kann außerdem reduziert werden. Ferner kann der Wirkungsgrad eines Motors gegenüber herkömmlichen Motoren dahingehend verbessert werden, dass der NEFZ (neuer europäischer Fahrzyklus)-Zyklusverbrauch durch einen mittels der Synchronisationsvorrichtung kundenakzeptablen Stopp-Start reduziert wird. So können beispielsweise zwei Umdrehungen der Kurbelwelle bis zur Synchronisierung eingespart werden.

Außerdem kann die Geräuschentwicklung beim Anlassvorgang reduziert werden. Die Synchronisationsvorrichtung weist einen Sensor am Nockenwellenende mit der Detektion der Nockenwellenlage und der Kurbelwellenlage auf. Darüber hinaus weist die Synchronisationsvorrichtung eine Verbindung oder ein Verbindungselement zu einem EVT-Steuergerät oder einer Steuereinrichtung auf. Außerdem kann eine Kommunikation der Signale zu einem Motorsteuergerät stattfinden.

Die Erfindung ist dort einsetzbar, wo die Lage zweier Wellen zueinander detektiert werden soll. Eine örtliche Nähe der Wellen zueinander kann dabei die Integration der Sensorik verbessern. Auch bei hydraulischen Nockenwellenverstellsystemen kann die Erfindung eingesetzt werden. Außerdem kann die Erfindung z. B. bei einem Bremssystem eingesetzt werden.

Kurbelwellen- und Nockenwellenwinkellageinformationen können indirekt über die Auswertung von Drehzahlinformationen oder den Wellenzustand (eine bestimmte Anzahl an Ereignissen innerhalb von einer bestimmten Zeit) generiert werden. Die Drehzahlinformation kann beispielsweise durch die Anzahl erkannter Zähne innerhalb eines Zeitintervalls bestimmt werden. Für eine schnelle Synchronisation kann einerseits die Nockenwelle und die Kurbelwelle mit Absolutwinkelsensoren bestückt werden. Die Absolutwinkelsensorik erlaubt den Einsatz der erfindungsgemäßen Funktionalität bereits bei dem initialen Motorstart eines Start-Stopp Systems. Unter initialem Motorstart ist dabei der erstmalige Motorstart eines Fahrzyklus zu verstehen.

Dabei soll ein Start-Stopp System ein System sein, das eine Synchronisierung der Nockenwelle und der Kurbelwelle beim initialen Motorstart erlaubt, während ein Stopp-Start System ein System sein soll, welches eine Synchronisierung während des Betriebes erlaubt.

Als aktive Sensoren können sich einfache Sensoren eignen, die um Funktionen erweitert worden sind. Eine Funktionserweiterung kann z. B. das Erkennen oder das Berechnen des Rückdrehens einer Welle sein sowie das permanente Überwachen des Nockenwellenwinkels oder des Kurbelwellenwinkels während des Stopp-Start Betriebes, auch bei sehr niedrigen Drehzahlen, die gegen null Umdrehungen pro Minute gehen. Aktive Sensoren können auch eine Bewegung eines Sensorzielrads erfassen, gleich in welche Richtung. Ein Sensorzielrad kann dabei ein an einer Welle befestigtes Zahnrad sein, dessen Bewegung beispielsweise durch an dem Sensor vorbeiziehende Zähne des Zahnrads erfasst werden kann. Die Bewegung des Zahnrades entspricht dabei einer Drehbewegung der Welle.

Ein Aspekt der Erfindung besteht darin, Messgrößen für eine während einer Motorstopphase anhaltende Synchronisation der Kurbelwelle und der Nockenwelle durch eine Erweiterung des EVT-Systems bereitzustellen. Da sich Getriebe und Verstellelement vorzugsweise an einem Ende der Nockenwelle befinden, können alle zur Synchronisation notwendigen Messgrößen an dem getriebeseitigen Ende lokal erfasst werden. Allerdings kann ein Sensor an einer beliebigen Stelle einer Welle angeordnet sein. Der Nockenwellensensor kann sich dabei angrenzend an dem Verstellelement befinden. Durch die gegebene Anbindung der Informationsverarbeitung des EVT an das Fahrzeugsteuergerät, z. B. über eine Busverbindung wie den CAN-Bus (Controller Area Network), können die lokal am EVT erfassten Synchronisationsinformationen an das Steuersystem übermittelt werden.

Mittels eines aktiven Sensors oder eines Absolutwinkelsensors kann die Kurbelwellenposition erfasst werden. Somit kann die initiale Position der Kurbelwelle dem Motorsteuergerät bekannt gemacht werden. Das Motorsteuergerät kann ein Teil der Steuereinrichtung sein.

Durch die Verwendung eines Dreiwellengetriebes mit einer festen Übersetzung können die Drehzahlen, Winkel oder Beschleunigungen der drei Wellen des Dreiwellengetriebes zueinander festgelegt sein. Die Drehzahlermittlung in der Phasenverstelleinrichtung oder in dem Elektromotor kann bezogen auf die Kurbelwelle eine hohe Auflösung haben. Durch die Verwendung mehrere Sensorelemente in der Phasenverstelleinrichtung kann die Winkellageerkennung rückdrehfähig gemacht werden. Das Dreiwellengetriebe kann ein Planetengetriebe sein, wobei das Planetengetriebe ein Antriebselement, ein Verstellelement und ein Abtriebselement aufweisen kann. Das Antriebselement kann mit der Kurbelwelle verbunden sein, das Verstellelement des Planetengetriebes kann mit der Verstellwelle verbunden sein und das Abtriebselement kann mit der Nockenwelle verbunden sein. Die Drehzahlen der Wellen zueinander können über ein Übersetzungsverhältnis des Getriebes festgelegt sein.

Darüber hinaus kann die Erfassung eines Startersignals die elektrischen und/oder elektronischen Komponenten in Bereitschaft versetzen, bevor die erste Drehung an den Wellen detektiert wurde.

Im Folgenden werden vorteilhafte Ausführungsbeispiele der vorliegenden Erfindung mit Verweis auf die Figuren beschrieben:
Fig. 1 zeigt einen Messschrieb eines Motorstartvorganges.
Fig. 2 zeigt ein EVT mit Stopp-Start Systemunterstützung für einen schnellen Motorstart gemäß einem exemplarischen Ausführungsbeispiel der Erfindung.

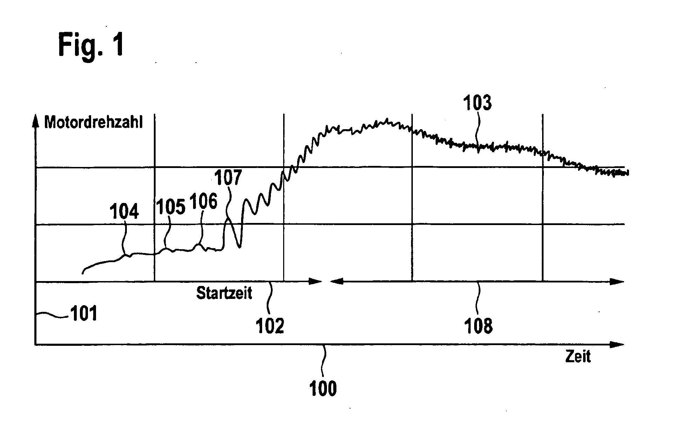

Fig. 1 zeigt einen Messschrieb eines Motorstartvorganges. Der in Fig. 1 dargestellte Messschrieb zeigt exemplarisch einen Motorstartvorgang bei einer für einen durchschnittlichen Stopp-Start Betriebsfall typischen Betriebsöltemperatur von 90°C. Die X-Achse 100 beschreibt die Zeit und die Y-Achse 101 beschreibt die Motordrehzahl. Die Startzeit bzw. das Intervall bis der Motor seinen Normalbetrieb aufgenommen hat, ist durch das Intervall 102 gekennzeichnet.

Bei der Messkurve 103 ist in einem Anfangsbereich am linken Ende der Fig. 1 zu sehen, dass es bei einer Motordrehzahl, die im Bereich der Anlasserdrehzahl liegt, zu den drei Verdichtungen 104, 105 und 106 kommt. Es kommt bei den drei Verdichtungen 104, 105 und 106 zu keiner Zündung. Die drei Verdichtungen 104, 105 und 106 liegen in der ersten Hälfte des Start-Zeitintervalls 102. Erst ab der vierten Verdichtung 107 kommt es zum ersten Zündvorgang und anschließend läuft der Motor auf die Leerlaufdrehzahl hoch. Der Bereich, in dem der Motor mit der Leerlaufdrehzahl läuft, ist mit dem Intervall 108 gekennzeichnet und im rechten Teil der Fig. 1 dargestellt.

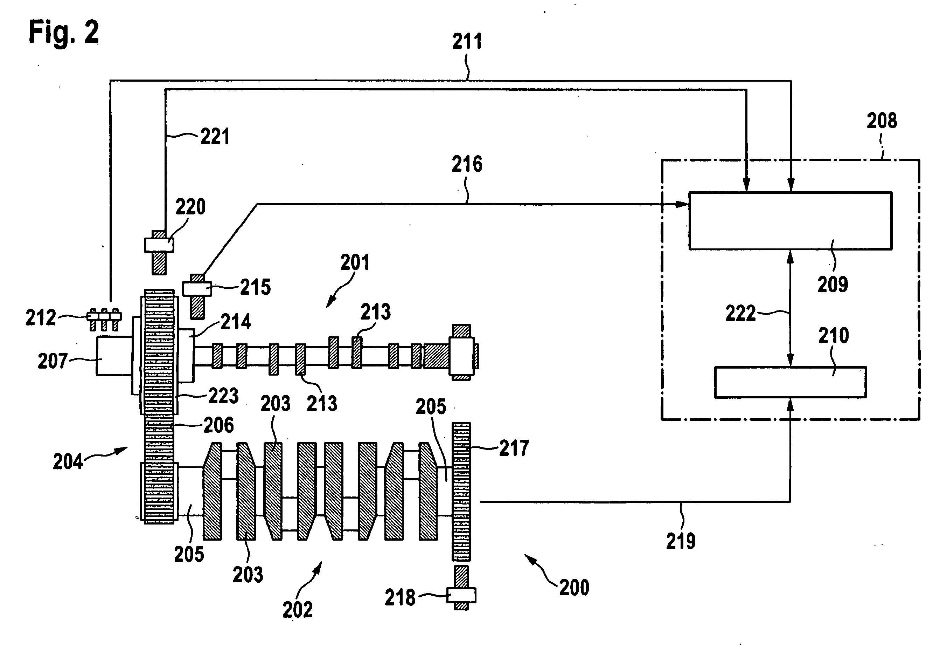

Fig. 2 zeigt ein EVT-System mit Stopp-Start Systemunterstützung für einen schnellen Motorstart gemäß einem exemplarischen Ausführungsbeispiel der vorliegenden Erfindung.

In Fig. 2 ist das Nockenwellen-Kurbelwellensystem eines Motors zu sehen. Dazu ist die Nockenwelle 201 und die Kurbelwelle 202 gezeigt. Die Kurbelwelle 202 weist die Kröpfungen 203 auf. Am linken Ende mündet die Welle 205 der Kurbelwelle 202 in das Getriebe 204, das in Fig. 2 nur teilweise dargestellt ist. In Fig. 2 ist die Steuerkette 206 gezeigt, die die Kurbelwelle 202 mit der Nockenwelle 201 verbindet. Das Übersetzungsverhältnis zwischen Kurbelwelle 202 und Nockenwelle 201 beträgt 2 zu 1. Das bedeutet, dass sich eine volle Umdrehung der Nockenwelle 201 zwei vollen Umdrehungen der Kurbelwelle 202 gegenüberstehen, wenn kein Verstellvorgang vorliegt. Die Verstellwelle 207 ist derart gegenüber der Nockenwelle 201 angeordnet, dass die Symmetrieachsen der Verstellwelle 207 und der Nockenwelle 201 zusammenfallen. Die Verstellwelle 207 ist mit der Nockenwelle 201 und der Kurbelwelle 202 über das Getriebe 204 gekoppelt. Die Steuerkette 206 liegt über dem Kettenrad, wobei das Kettenrad in das Getriebe 204 integriert ist. Mittels der Verstellwelle 207 lässt sich über das Getriebe 204 eine Phasenlage zwischen der Drehbewegung der Nockenwelle 201 und der Kurbelwelle 202 einstellen.

Zur Verstellung der Verstellwelle 207 ist an der Verstellwelle 207 eine Phasenverstelleinrichtung oder ein Verstellelement, beispielsweise ein Elektromotor, angeordnet. Das Verstellelement ist in Fig. 2 nicht dargestellt. Der Versteller oder das Verstellelement ist Teil des EVT-Systems. Das EVT-System weist neben dem Verstellelement die Steuereinrichtung 208 auf. Die Steuereinrichtung 208 umfasst das EVT-Steuergerät 209 und das Motorsteuergerät 210, wobei das Motorsteuergerät 210 und das EVT-Steuergerät über die Verbindung 222 verbunden sind. Die Verbindung 222 kann beispielsweise ein Bus wie beispielsweise ein CAN-Bus sein. Die Funktion des EVT-Steuergerätes 209 kann auch in dem E-Motor, dem Elektromotor oder der Phasenverstelleinrichtung oder in dem Motorsteuergerät 210 integriert oder teilweise integriert sein.

Über die Verbindung 211, die ebenfalls als Bus ausgebildet sein kann, ist die Steuereinrichtung 208 und insbesondere das EVT-Steuergerät 209 mit dem Hilfssensor 212 verbunden. Der Hilfssensor 212 kann dabei einen Zustand der Verstellwelle 207 erfassen und an das EVT-Steuergerät weiterleiten. Der Sensor 212 kann in der Phasenverstelleinrichtung integriert sein. Der Sensor 212 kann ein aktiver Sensor sein, der beispielsweise ein Kommutierungssensor des EVT sein kann.

An der Nockenwelle 201 sind die Nocken 213 angeordnet. Im Bereich des Getriebes 204 ist axial an der Nockenwelle der Nockenwellenflankengeber 214 angeordnet. Der Nockenwellenflankengeber 214 ist derart ausgebildet, dass mit Hilfe des Nockenwellensensors 215 ein Zustand über die Drehbewegung der Nockenwelle erkannt werden kann. Über die Verbindung 216, die ebenfalls als Busleitung ausgebildet sein kann, kann die Zustandsinformation der Wellenzustandseinrichtung 215 oder des Nockenwellensensors 215 an die Steuereinrichtung 208 weitergeleitet werden.

An dem in Fig. 2 rechten Rand der Kurbelwelle 202 ist der Kurbelwellenflankengeber 217 bzw. das Sensorzielrad 217 dargestellt, welches axial an der Welle 205 der Kurbelwelle 202 angeordnet ist. Bei einer Drehung der Kurbelwelle 202 kann der Zustand der Kurbelwelle 202 über den Kurbelwellensensor 218 erfasst werden und über die Verbindung 219, die ebenfalls als Bus, beispielsweise CAN-Bus, ausgebildet sein kann, an die Steuereinrichtung 208 weitergegeben werden. Der Kurbelwellensensor 218 tastet zur Zustandserkennung das Sensorzielrad 217 nach charakteristischen Merkmalen ab.

Mittels des Hilfssensors 220, der eine Bewegung der Steuerkette 208 erfasst, kann über die Verbindung 221, die ebenfalls als Bus ausgebildet sein kann, eine Sensorinformation an die Steuereinrichtung 208 weitergeleitet werden. Sämtliche über die Verbindungen 211, 216, 219, 221 und 222 empfangene Informationen können in der Steuereinrichtung 208 ausgewertet werden und über eine in Fig. 2 nicht dargestellte Verbindung der Steuereinrichtung 208 mit dem Verstellelement als Stellgröße an das Verstellelement weitergegeben werden. Somit lässt sich eine Phasendifferenz zwischen der Nockenwelle 201 und der Kurbelwelle 202 einstellen.

Bezüglich der Sensierung mittels der Sensoren 212, 220, 218 und 215 gibt es mehrere Anordnungsmöglichkeiten, auf die im Folgenden eingegangen werden soll.

Das Verstellsystem, das das Verstellelement, die Verstellwelle 207 und das Getriebe 204 umfasst, ist getriebeseitig mit und ohne den Einsatz von Übertragungselementen mit drei Wellen verbunden. Ein Beispiel für ein Übertragungselement ist ein Planetengetriebe. Bei den drei Wellen 207, 201, 202 handelt es sich in Fig. 2 um die Verstellwelle 207, die Nockenwelle 201 und die Kurbelwelle 202. Mit Hilfe der Informationen der Sensoren 212, 220, 215, 218 auf diesen Wellen 207, 201, 202 oder mit der Sensorik, die an den EVT-Komponenten verbaut ist, beispielsweise der Verstellsensor 212, kann eine Winkelbestimmung und eine Drehzahlbestimmung der Wellen 207, 201, 202 erfolgen. Somit kann auch die Bestimmung des Relativwinkels zwischen der Kurbelwelle 202 und der Nockenwelle 201 erfolgen. Dabei kann auf die Getriebegrundgleichung zurückgegriffen werden, die einen Zusammenhang zwischen dem Übersetzungsverhältnis des Getriebes 204 und der Drehzahl oder dem Drehwinkel der Wellen 207, 201, 202 herstellt.

Zusätzlich zu aktiven Sensoren können ergänzend passive Sensoren eingesetzt werden. Durch die Verwendung von zusätzlichen passiven Sensoren kann die Genauigkeit der Bestimmung der Phasendifferenz zwischen der Kurbelwelle 202 und der Nockenwelle 201 erhöht werden. Mittels zusätzlicher passiver Sensoren können beispielsweise Effekte, die durch eine Dehnung der Steuerkette 206 entstehen, eliminiert oder herausgerechnet werden. Zusätzliche Verschiebungen der Phasenlage zwischen der Kurbelwelle 202 und der Nockenwelle 201 können somit korrigiert werden.

Ein Halten der Synchronisation kann durch einen passiven Kurbelwellensensor 218, einen aktiven Nockenwellensensor 215 und einen aktiven Verstellwellensensor 212 erreicht werden. Aus dem Nockenwellensensor 215 und dem Verstellwellensensor 212 kann mittels der Getriebegrundgleichung der Verdrehwinkel der Kurbelwelle 202 berechnet werden. Diese Berechnung kann in der Steuereinrichtung 208 erfolgen. Der ermittelte Rückdrehwinkel kann an das Motorsteuergerät 210 weitergegeben werden.

Eine weitere Möglichkeit die Synchronisation zwischen Nockenwelle 201 und Kurbelwelle 202 aufrecht zu erhalten, besteht in der Verwendung eines aktiven Kurbelwellensensors 218, eines passiven Nockenwellensensors 215 und einer aktiven Verstellwellensensorik 212.

Wegen des zwischen der Kurbelwelle 202 und der Steuerkette 206 vorhandenen Formschlusses und dem Übersetzungsverhältnis zwischen Kurbelwelle 202 und Nockenwelle 201 von 2 zu 1 über den Steuertrieb 206, wird die Kurbelwellenwinkelinformation an das EVT-Getriebekettenrad 223 relativ übermittelt. An dem EVT-Getriebekettenrad 223 wird die Kurbelwellenwinkelinformation mit dem Kurbelwellenhilfssensor 220 erfasst. Die relative Übermittlung der Information kann z. B. einer der kettenradseitigen Endanschläge des Getriebes eines Nockenwellenverstellers oder einer Phasenverstelleinrichtung übernehmen, welche bei der Montage des Nockenwellenstellers, in Fig. 2 nicht gezeichnet, an die Nockenwelle 201 zur Kurbelwelle 202 definiert ausgerichtet montiert werden. Eine Erfassung der Kurbelwellenwinkellage erfolgt hier an einem mit der Kettenradseite des EVT-Getriebes fest verbundenen Bauteils.

Alternativ kann die Steuerkette 206, der Steuerriemen 206 oder der Zahnradtrieb 206 genutzt werden, um ein charakteristisches Kurbelwellenmerkmal auf das Kettenrad 323 zu transferieren. Dabei kann das charakteristische Kurbelwellenmerkmal entsprechend der Länge des Steuertriebs 206 vielfach auf dem Steuertrieb 206 abgelegt werden. Beispielsweise kann jedes x-te Kettenglied des Steuertriebs 206 eine verbreiterte sensorauswertbare Lasche aufweisen. Die Lage des Kettengliedes der Steuerkette 206 oder die Lage der Kettenglieder zum Kurbelwellenbezug ist durch die Montage gegeben oder kann aus dem Vergleich der Sensorinformationen des Kurbelwellensensors 218 und des Kurbelwellenhilfssensors 220 oder des Kurbelwellensensors 218 und des Nockenwellensensors 215 unter Berücksichtigung des Verstellwinkels ermittelt werden. Die Erfassung der Kurbelwellenwinkellage erfolgt an einem direkt mit der Kettenradseite des EVT-Getriebes 204 verbundenen Bauteil.

Eine dritte Möglichkeit für das Halten der Synchronisation der Nockenwelle 201 und der Kurbelwelle 202 besteht durch einen aktiven Kurbelwellensensor 218, einen aktiven Nockenwellensensor 215 und eine passive Verstellwellensensorik 212. Bei dieser Konfiguration sind die Kurbelwelle 202 sowie die Nockenwelle 201 mit einer ausreichend genauen Signalauflösung verbaut. Durch die Auswertung des hochaufgelösten Kurbelwinkels und des hochaufgelösten Nockenwinkels kann der relative Verdrehwinkel oder die Phasendifferenz direkt verrechnet werden.

Ein weiteres Beispiel zum Halten der Synchronisation der Nockenwelle 201 und der Kurbelwelle 202 ist durch die Ausführung aller Sensoren 212, 220, 215, 218 als aktive Sensoren möglich.

Ferner ist ein Halten der Synchronisation der Nockenwelle 201 und der Kurbelwelle 202 aber auch durch einen passiven Kurbelwellensensor 218 und eine aktive Verstellwellenrelativsensorik für die Kurbelwelle oder wahlweise die Nockenwelle möglich. Eine Verstellwellenrelativsensorik soll dabei direkt den Phasenunterschied zwischen der Nockenwelle 201 und der Kurbelwelle 202 erfassen. Dazu kann ein Verstellwellenrelativsensor, der beispielsweise aus der WO 2004/020795 bekannt ist, zum Einsatz kommen.

Noch ein weiteres Beispiel zum Halten der Synchronisation der Nockenwelle 201 und der Kurbelwelle 202 ist durch einen aktiven Kurbelwellensensor 218 und eine aktive Verstellwellenrelativsensorik für die Kurbelwelle 202 und für die Nockenwelle 201 möglich. Außerdem kann die aktive Verstellwellenrelativsensorik auch zwischen der Verstellwelle 207 und der Nockenwelle 201 oder zwischen der Verstellwelle 207 und der Kurbelwelle 202 angeordnet sein. Diese Konfiguration ist möglich, falls das Fahrzeug mit einem Schnellstartsystem ausgerüstet ist, welches diese aktiven Sensoren auf der Kurbelwelle 202 benötigt. Hier kann das EVT mit der Verstellwellenrelativsensorik unabhängig von den Kurbelwellensignalen eine exakte Berechnung des aktuellen Relativwinkels bzw. der Phasendifferenz zwischen der Nockenwelle 201 und der Kurbelwelle 202 leisten.

Der Nockenwellensensor 215 kann derart ausgebildet sein, so dass er eine hinreichende Winkelauflösung oder eine hinreichend hohe Auflösung zur Verfügung stellt. Beispielsweise kann der Nockenwellensensor 215 für eine hinreichende Winkelauflösung eine Auflösung von mehr als acht Flanken aufweisen und eine Rückdreherkennung ermöglichen. Eine Rückdreherkennung kann durch eine Bestückung des Nockenwellensensors 215 mit zwei Sensorelementen und einer Auswertung dieser von den beiden Sensoren gelieferten Informationen unter Berücksichtigung der Reihenfolge der erkannten Sensorschaltungen erfolgen.

Weiterhin kann die Auswertung der hoch aufgelösten aktiven Sensoren nur zu bestimmten Phasen beim Betrieb des Verbrennungsmotors durchgeführt werden. Diese bestimmten Phasen können dadurch gekennzeichnet sein, dass eine möglichst genaue Bestimmung der Drehzahl und/oder des Verdrehwinkels sinnvoll ist und dass viele Informationen für eine Auswertung benötigt werden. Dies könnte beispielsweise bei einer geringen Drehzahl beim Motorstart oder beim Motorstopp der Fall sein.

In den anderen Phasen mögen an die Genauigkeit nur geringe Anforderungen gestellt sein. In diesen Phasen könnte es ausreichen, herkömmliche passive Sensoren auszuwerten. Dadurch kann die Zahl der erzeugten Informationen reduziert werden, wodurch die Prozessorbelastung einer Steuereinrichtung 208 verringert werden kann.

Mit Hilfe der beschriebenen Sensierungsmöglichkeiten kann der Phasenwinkel während der gesamten Stopp- und Startphase eines Verbrennungsmotors bestimmt werden. Diese aktuelle Winkelinformation kann zur Einregelung des Phasenwinkels genutzt werden. Der Phasenwinkel bezeichnet dabei den Verdrehwinkel zwischen der Nockenwelle 201 und der Kurbelwelle 202 bezogen auf eine Ausgangsbeziehung der beiden Wellen zueinander. Der Regler kann den Sollphasenwinkel, der intern berechnet oder extern beispielsweise durch das Motorsteuergerät 210 vorgegeben wird, durch den Vergleich mit dem aktuell berechneten Phasenwinkel einregeln.

Sobald das auf der Verstellwelle 207 montierte Verstellelement, beispielsweise ein E-Motor, die zu erbringende Energie aufbringen kann, erfolgt die Regelung des Phasenwinkels zwischen der Kurbelwelle 202 und der Nockenwelle 201 beim Motorstop, bis die Verbrennungsmotordrehzahl auf Null abgefallen ist. Auch darüber hinaus kann eine Regelung des Phasenwinkels erfolgen. Beim darauf folgenden Verbrennungsmotorstart kann auch der Phasenwinkel weiter geregelt werden. Die Regelung des Phasenwinkels kann dabei ab der Erkennung eines Startersignals, beispielsweise dem Betätigen eines Gaspedals, ab der Erkennung einer bestimmten Kurbelwellendrehzahl oder aber auch bereits davor erfolgen.

Bei einer stehenden Kurbelwelle, wie auch bei sehr geringen Kurbelwellendrehzahlen, ist zumeist die in das Verstellelement oder den E-Motor einzubringende Energie sehr hoch. Die zumeist sehr hohe in das Verstellelement eingebrachte Energie, insbesondere bei niedrigen Drehzahlen, liegt im Wesentlichen an relativ hohen dynamischen und statischen Momenten der Nockenwelle. Die höchsten Kräfte entstehen bei der Betätigung der Ventilfeder durch einen Nocken 213. Falls das Verstellelement aufgrund zu hoher Lastmomente nicht in der Lage ist, eine Verstellung bei einer stehenden Kurbelwelle, also einer nicht von dem Verbrennungsmotor angetriebenen Kurbelwelle, oder bei einer niedrigen Drehzahl der Kurbelwelle durchzuführen, wird der Energieeintrag statisch oder dynamisch begrenzt. Der Energieeintrag wird auch begrenzt, wenn der benötigte Energieeintrag das Verstellelement schädigen könnte. Die Begrenzung des Energieeintrags kann dabei verschiedenartig ausgeführt sein. Die Energiebegrenzung kann mittels:
- einer Nockenwellenpositionsüberwachung
- einer Lastmomentüberwachung
- einer Nockenwellen/Kurbelwellen/Verstellwellendrehzahlüberwachung
- einer Überwachung des Moments des Verstellelements, z. B. E-Motor
- einer Stromüberwachung
- einer Spannungsüberwachung
- einer Tastverhältnisüberwachung

erfolgen. Die Begrenzung der Energie kann und sollte in allen Varianten in Einbezug der Temperatur, beispielsweise der Öltemperatur, Außentemperatur, etc. erfolgen.

Bei der Nockenwellenpositionsüberwachung wird die aktuelle Nockenwellenposition, d. h. der Winkel der Nockenwelle 201 ausgewertet. Wird bei einer aktuellen Position der Nockenwelle 201 eine Ventilfeder mit einem Nocken 213 betätigt, so wird die eingebracht Energie in das Verstellelement statisch oder dynamisch in Abhängigkeit der Position der Nockenwelle begrenzt. Die Position der Nockenwelle 201 kann dabei über einen Drehwinkel der Nockenwelle bestimmt sein.

Bei der Lastmomentüberwachung wird aufgrund der ausgewerteten Nockenwelleninformationen oder des Zustands der Nockenwelle 201, beispielsweise der Drehzahl oder der Position, ein Lastmoment berechnet. Darüber hinaus können auch unter Zuhilfenahme der Informationen auf der Kurbelwelle 202 und der Verstellwelle 207 sowie des Getriebes 204 die anliegenden Lastmomente berechnet werden. Weiterhin kann eine direkte Messung der Lastmomente erfolgen, wie beispielsweise durch eine Momentenmesswelle. Modellbasiert können auch die Momente aus den Informationen der eingebrachten Leistung über der Zeit abgeschätzt werden. Ab einem definierten Schwellwert der Last ist eine statische oder dynamische Begrenzung möglich.

Die Nockenwellen-/Kurbelwellen-/Verstellwellendrehzahlüberwachung kann durch die Beobachtung der Nockenwellendrehzahl, der Kurbelwellendrehzahl und/oder der Verstellwellendrehzahl des Verstellsystems erfolgen. Dadurch ist eine statische/dynamische Begrenzung möglich. Beispielsweise kann bei der Erkennung der Kurbelwellendrehzahl in einer Höhe von null Umdrehungen pro Minute die eingebrachte Leistung zu Null gesetzt werden. In anderen Worten bedeutet das, dass bei einem Wellenstillstand kein Regeln der Phasenlage der Nockenwelle 201 zu der Kurbelwelle 202 erfolgt.

Modellbasiert kann mittels der Überwachung des Verstellelementmoments oder des Stroms oder der Spannung oder des Tastverhältnis in der Steuereinrichtung 208 das Moment des Verstellelements oder des Elektromotors berechnet werden. Dazu können beispielsweise die benötigten Ströme, Spannungen und/oder Tastverhältnisse über der Zeit ausgewertet werden und zu einer Leistung verrechnet werden. Ab einer bestimmten Schwelle oder in genereller Abhängigkeit zu dieser eingebrachten Leistung kann die dynamische oder statische Begrenzung gewählt werden. Alternativ oder auch parallel zum Einregeln des Phasenwinkels zwischen der Kurbelwelle 202 und der Nockenwelle 201 können noch andere Maßnahmen zum Halten oder dem geregelten Verstellen der Phase zwischen der Kurbelwelle 202 und der Nockenwelle 201 erfolgen.

Bereits während des Motorabstellvorgangs kann mittels der Steuereinrichtung 208 die erwartete neue Sollwinkelposition der Kurbelwelle 202 und der Nockenwelle 201 für den nächsten Motorstart angefahren werden. Dadurch kann die Zeit zum Erreichen des Sollwinkels für den nächsten Motorstart verkürzt werden.

Ein- und Auslassventilsteuerzeiten können genutzt werden, um die Startzeit weiter zu verkürzen. Dabei sind Steuerzeiten mit geringer Überschneidung sowie Steuerzeiten mit einer hohen effektiven Verdichtung, d. h. Einlassfließpunkt nahe dem unteren Totpunkt, anzustreben.

Eine hohe Winkelauflösung kann mit einem Kurbelwellenhilfssensortriggerrad, das in Fig. 2 nicht gezeichnet ist, und einem Nockenwellensensortriggerrad 214 mit mindestens acht Flanken gewährleistet werden. Die Wellenzustandseinrichtung ist dabei derart ausgebildet, dass die Wellenzustandseinrichtung bei einer vollen Wellenumdrehung mindestens acht Flanken, Flankenwechsel oder Impulse bereitstellt.

Zur Erkennung kann eines oder mehrere der Sensorzielräder 217, 214, 223 aus dauermagnetischem Material oder ferritischem Material ausgebildet sein. Die

Wellenzustandseinrichtung weist ein Sensorzielrad auf, wobei das Sensorzielrad aus dauermagnetischem Material oder ferritischem Material ausgebildet ist.

Das Gehäuse des Kurbelwellenhilfssensors 220 und/oder das Gehäuse des Nockenwellensensors 215 kann in einem EVT-Bauteil, welches relativ zum Zylinderkopf des Motors steht, integriert werden. Beispielsweise kann der Kurbelwellenhilfssensor 220 oder der Nockenwellensensor 215 in das Elektromotorgehäuse integriert werden. Dadurch kann eine zusätzliche Dichtung des Sensorgehäuses entfallen.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Synchronisationsvornchtung für einen Nockenwellenversteller, umfassend:
eine Steuereinrichtung (208);
einen ersten aktiven Sensor (215) zum Ermitteln einer Winkellage einer ersten Welle (201);
einen zweiten aktiven Sensor (218, 220) zum Ermitteln einer Winkellage einer zweiten Welle (202) oder zum Ermitteln einer Phasenlage der ersten Welle (201) zur zweiten Welle (202);
wobei der erste aktive Sensor (215) eingerichtet ist, der Steuereinrichtung (208) Informationen über die Winkellage der ersten Welle (201) bereitzustellen;
wobei der zweite aktive Sensor (218, 220) ausgebildet ist, der Steuereinrichtung (208) Informationen über die Winkellage der zweiten Welle (202) oder die Phasenlage zwischen der ersten Welle (201) und der zweiten Welle (202) bereitzustellen;
wobei der erste aktive Sensor (215) und der zweite aktive Sensor (218, 220) eingerichtet sind, eine Wellendrehzahl zumindest zwischen einem Referenzwert für die Wellendrehzahl und dem Wellenstillstand zu erkennen; und
wobei der erste aktive Sensor (215) und der zweite aktive Sensor (218, 220) eingerichtet sind, eine Wellendrehrichtungsumkehr zu erkennen;
wobei die Steuereinrichtung (208) eingerichtet ist, ein Steuersignal zum Einstellen einer vorgebbaren Phasendifferenz zwischen der ersten Welle (201) und der zweiten Welle (202) bereitzustellen.

2. Synchronisationsvorrichtung nach Anspruch 1, wobei ferner der erste aktive Sensor (215) und der zweite aktive Sensor (218, 220) eingerichtet sind, während einer Stopphase einer Drehung der ersten Welle (201) und der zweiten Welle (202), eine permanente Überwachung der Winkellage der ersten Welle (201) und der Winkellage der zweiten Welle (202) oder der Phasenlage der zweiten Welle (202) zu ermöglichen.

3. Synchronisationsvorrichtung nach Anspruch 1 oder 2, ferner umfassend:
einen dritten Sensor (212) zum Ermitteln einer Winkellage einer dritten Welle (207);
wobei der dritte Sensor (212) eingerichtet ist, der Steuereinrichtung (208) Informationen über die Winkellage der dritten Welle (207) bereitzustellen.

4. Synchronisationsvorrichtung nach Anspruch 3, wobei der dritte Sensor (212) ein aktiver Sensor ist.

5. Synchronisationsvorrichtung nach einem der Ansprüche 1 bis 4, ferner umfassend:
ein Verstellelement;
wobei das Verstellelement mit einer dritten Welle (207) gekoppelt ist; und
wobei die dritte Welle (207) mit der ersten Welle (201) und mit der zweiten Welle (202) kinematisch gekoppelt ist;
wobei das Verstellelement eingerichtet ist, den vorgebbaren Phasenwinkel zwischen der ersten Welle (201) und der zweiten Welle (202) mittels Beschleunigen oder mittels Bremsen der dritten Welle (207) einzustellen.

6. Synchronisationsvorrichtung nach Anspruch 5,
wobei das Verstellelement ein Elektromotor ist.

7. Synchronisationsvorrichtung nach Anspruch 5 oder 6,
wobei eine Energiezufuhr zu dem Verstellelement statisch oder dynamisch begrenzbar ist.

8. Synchronisationsvornchtung nach einem der Ansprüche 5 bis 7,
wobei das Verstellelement einen Sensor ausgewählt aus der Gruppe bestehend aus dem ersten aktiven Sensor (215), dem zweiten aktiven Sensor (218, 220) und dem dritten Sensor (212) umfasst.

9. Synchronisationsvorrichtung nach einem der Ansprüche 1 bis 8, ferner umfassend:
eine Phasenhalteeinrichtung, welche eingerichtet ist, die vorgebbare Phasendifferenz zwischen der ersten Welle (201) und der zweiten Welle (202) aufrecht zu erhalten.

10. Synchronisationsvorrichtung nach einem der Ansprüche 5 bis 9,
wobei das Verstellelement eingerichtet ist, bei einem Motorabstellvorgang eine Phasendifferenz zwischen der ersten Welle (201) und der zweiten Welle (202) einzustellen.

11. Synchronisationsvorrichtung nach einem der Ansprüche 1 bis 10,
wobei die Synchronisationsvorrichtung ausgebildet ist, bei einer Drehzahl des Motors zwischen einer Referenzdrehzahl des Motors und dem Stillstand des Motors aktiviert zu werden.

12. Synchronisationsvorrichtung nach einem der Ansprüche 1 bis 11,
wobei zumindest einer des ersten aktiven Sensors (215), des zweiten aktiven Sensors (218, 220) und des dritten Sensors (212) als ein Magnetfeldsensor ausgebildet ist.

13. Synchronisationsvorrichtung nach einem der Ansprüche 1 bis 12, ferner umfassend:
eine Speichereinrichtung, welche zur Speicherung einer Phasendifferenz zwischen der ersten Welle (201) und der zweiten (202) Welle während eines Motorstillstandes eingerichtet ist.

14. Synchronisationsvorrichtung nach einem der Ansprüche 1 bis 13, ferner umfassend:
einen passiven Sensor;
wobei der passive Sensor zusätzlich zu zumindest einem des ersten aktiven Sensors (215) oder des zweiten aktiven Sensors (218, 220) an zumindest einer der ersten Welle (201) oder der zweiten Welle (202) angeordnet ist.

15. Synchronisationsvorrichtung nach einem der Ansprüche 1 bis 14,
wobei die Synchronisationsvorrichtung für den Einsatz in einem Bremssystem eingerichtet ist.

16. Synchronisationsvorrichtung nach einem der Ansprüche 1 bis 15, wobei zumindest einer der Sensoren ausgewählt aus der Gruppe der Sensoren bestehend aus dem ersten aktiven Sensor (215), dem zweiten aktiven Sensor (218, 220) und dem dritten Sensor (212) in dem Nockenwellenversteller integriert ist.

17. Verfahren zur Synchronisation von Wellen in einem Motor während einer Motorstart- oder einer Motorstopphase, umfassend:
Ermitteln einer Winkellage einer ersten Welle (201) mittels eines ersten aktiven Sensors (215);
Ermitteln einer Winkellage einer zweiten Welle (202) mittels eines zweiten aktiven Sensors (218, 220); oder
Ermitteln einer Phasenlage zwischen der ersten Welle (201) und der zweiten Welle (202);
wobei der erste aktive Sensor (215) und der zweite aktive Sensor (218, 220) eingerichtet sind, eine Wellendrehzahl zumindest zwischen einem Referenzwert für die Wellendrehzahl und dem Wellenstillstand zu erkennen;
wobei der erste aktive Sensor (215) und der zweite aktive Sensor (218, 220) eingerichtet sind, eine Wellendrehrichtungsumkehr zu erkennen;
Bereitstellen von Informationen über die Winkellage der ersten Welle (201) an eine Steuereinrichtung (208);
Bereitstellen von Informationen über die Winkellage der zweiten Welle (202) oder der Phasenlage zwischen der ersten Welle (201) und der zweiten Welle (202) an die Steuereinrichtung;
Bereitstellen eines Steuersignals zum Einstellen einer vorgebbaren Phasendifferenz zwischen der ersten Welle (201) und der zweiten Welle (202).

18. Verfahren nach Anspruch 17, ferner umfassend:
Ermitteln einer Winkellage einer dritten Welle (207) mittels eines dritten Sensors (212);
Bereitstellen von Informationen der Winkellage der dritten Welle (207) an die Steuereinrichtung (208).

19. Verfahren nach Anspruch 17 oder 18, ferner umfassend:
Einstellen der vorgebbaren Phasendifferenz zwischen der ersten Welle (201) und der zweiten Welle (202) mittels eines Verstellelements.

20. Verfahren nach einem der Ansprüche 17 bis 19, ferner umfassend:
Aufrechterhalten der vorgebbaren Phasendifferenz zwischen der ersten Welle (201) und der zweiten Welle (202) mittels einer Phasenhalteeinrichtung.

21. Verfahren nach einem der Ansprüche 17 bis 20, ferner umfassend:
Einstellen der Phasendifferenz zwischen der ersten Welle (201) und der zweiten Welle (202) bei einem Motorabstellvorgang.

22. Verfahren nach einem der Ansprüche 17 bis 21, ferner umfassend:
Aktivieren einer Synchronisationsvorrichtung bei einer Drehzahl des Motors zwischen einer Referenzdrehzahl des Motors und dem Stillstand des Motors.

23. Verfahren nach einem der Ansprüche 17 bis 22, ferner umfassend:
Speichern einer Phasendifferenz zwischen der ersten Welle (201) und der zweiten Welle (202).

24. Computerlesbares Speichermedium, auf dem ein Programm zum Synchronisieren von Wellen in einem Motor während einer Motorstart- oder einer Motorstopphase gespeichert ist, welches Programm, wenn es von einem Prozessor ausgeführt wird, folgende Verfahrensschritte.steuert:
Ermitteln einer Winkellage einer ersten Welle (201) mittels eines ersten aktiven Sensors (215);
Ermitteln einer Winkellage einer zweiten Welle (202) mittels eines zweiten aktiven Sensors (218, 220); oder
Ermitteln einer Phasenlage zwischen der ersten Welle (201) und der zweiten Welle (202);
wobei der erste aktive Sensor (215) und der zweite aktive Sensor (218, 220) eingerichtet sind, eine Wellendrehzahl zumindest zwischen einem Referenzwert für die Wellendrehzahl und dem Wellenstillstand zu erkennen;
wobei der erste aktive Sensor (215) und der zweite aktive Sensor (218, 220) eingerichtet sind, eine Wellendrehrichtungsumkehr zu erkennen;
Bereitstellen von Informationen über die Winkellage der ersten Welle (201) an eine Steuereinrichtung (208);
Bereitstellen von Informationen über die Winkellage der zweiten Welle (202) oder der Phasenlage zwischen der ersten Welle (201) und der zweiten Welle (202) an die Steuereinrichtung;
Bereitstellen eines Steuersignals zum Einstellen einer vorgebbaren Phasendifferenz zwischen der ersten Welle (201) und der zweiten Welle (202).

25. Synchronisationsvorrichtung für einen Nockenwellenversteller, umfassend:
eine Steuereinrichtung (208);
eine aktive Verstellwellenrelativsensorik;
wobei die aktive Verstellwellenrelativsensorik eingerichtet ist, der Steuereinrichtung (208) eine Phasenlage zwischen der ersten Welle (201, 202, 207) und der zweiten Welle (201. 202, 207) bereitzustellen;
wobei die aktive Verstellwellenrelativsensorik eingerichtet ist, eine Wellendrehzahl zumindest zwischen einem Referenzwert für die Wellendrehzahl und dem Wellenstillstand zu erkennen; und
wobei die aktive Verstellwellenrelativsensorik eingerichtet ist, eine Wellendrehrichtungsumkehr zu erkennen;
wobei die Steuereinrichtung (208) eingerichtet ist, ein Steuersignal zum Einstellen einer vorgebbare Phasendifferenz zwischen der ersten Welle (201, 202, 207) und der zweiten Welle (201, 202, 207) bereitzustellen.

## Claims

1. Synchronization apparatus for a camshaft adjuster, comprising:
a control device (208);
a first active sensor (215) for determining an angular position of a first shaft (201);
a second active sensor (218, 220) for determining an angular position of a second shaft (202) or for determining a phase relation of the first shaft (201) with respect to the second shaft (202);
the first active sensor (215) being set up to provide the control device (208) with information about the angular position of the first shaft (201);
the second active sensor (218, 220) being configured to provide the control device (208) with information about the angular position of the second shaft (202) or the phase relation between the first shaft (201) and the second shaft (202);
the first active sensor (215) and the second active sensor (218, 220) being set up to detect a shaft rotational speed at least between a reference value for the shaft rotational speed and the shaft standstill; and
the first active sensor (215) and the second active sensor (218, 220) being set up to detect a reversal in the shaft rotational direction;
the control device (208) being set up to provide a control signal for setting a predefinable phase difference between the first shaft (201) and the second shaft (202).

2. Synchronization apparatus according to Claim 1, the first active sensor (215) and the second active sensor (218, 220) being set up, furthermore, during a stop phase of a rotation of the first shaft (201) and of the second shaft (202), to make permanent monitoring possible of the angular position of the first shaft (201) and the angular position of the second shaft (202) or the phase relation of the second shaft (202).

3. Synchronization apparatus according to Claim 1 or 2, comprising, furthermore:
a third sensor (212) for determining an angular position of a third shaft (207);
the third sensor (212) being set up to provide the control device (208) with information about the angular position of the third shaft (207).

4. Synchronization apparatus according to Claim 3, the third sensor (212) being an active sensor.

5. Synchronization apparatus according to one of Claims 1 to 4, comprising, furthermore:
an adjusting element;
the adjusting element being coupled to a third shaft (207); and
the third shaft (207) being coupled kinematically to the first shaft (201) and to the second shaft (202);
the adjusting element being set up to set the predefinable phase angle between the first shaft (201) and the second shaft (202) by means of acceleration or by means of braking of the third shaft (207).

6. Synchronization apparatus according to Claim 5, the adjusting element being an electric motor.

7. Synchronization apparatus according to Claim 5 or 6, it being possible for an energy supply to the adjusting element to be limited statically or dynamically.

8. Synchronization apparatus according to one of Claims 5 to 7, the adjusting element comprising a sensor selected from the group consisting of the first active sensor (215), the second active sensor (218, 220) and the third sensor (212).

9. Synchronization apparatus according to one of Claims 1 to 8, comprising, furthermore:
a phase-maintaining device which is set up to maintain the predefinable phase difference between the first shaft (201) and the second shaft (202).

10. Synchronization apparatus according to one of Claims 5 to 9, the adjusting element being set up to set a phase difference between the first shaft (201) and the second shaft (202) in the case of an engine switching-off operation.

11. Synchronization apparatus according to one of Claims 1 to 10, the synchronization apparatus being configured to be activated at a rotational speed of the engine between a reference rotational speed of the engine and the standstill of the engine.

12. Synchronization apparatus according to one of Claims 1 to 11, at least one of the first active sensor (215), the second active sensor (218, 220) and the third sensor (212) being configured as a magnetic field sensor.

13. Synchronization apparatus according to one of Claims 1 to 12, comprising, furthermore:
a storage device which is set up for storing a phase difference between the first shaft (201) and the second shaft (202) during an engine standstill.

14. Synchronization apparatus according to one of Claims 1 to 13, comprising, furthermore:
a passive sensor;
the passive sensor being arranged in addiction to at least one of the first active sensor (215) or the second active sensor (218, 220) on at least one of the first shaft (201) or the second shaft (202).

15. Synchronization apparatus according to one of Claims 1 to 14, the synchronization apparatus being set up for use in a brake system.

16. Synchronization apparatus according to one of Claims 1 to 15, at least one of the sensors selected from the group of sensors consisting of the first active sensor (215), the second active sensor (218, 220) and the third sensor (212) being integrated into the camshaft adjuster.

17. Method for synchronizing shafts in an engine during an engine starting phase or an engine stop phase, comprising:
determination of an angular position of a first shaft (201) by means of a first active sensor (215);
determination of an angular position of a second shaft (202) by means of a second active sensor (218, 220); or
determination of a phase relation between the first shaft (201) and the second shaft (202);
the first active sensor (215) and the second active sensor (218, 220) being set up to detect a shaft rotational speed at least between a reference value for the shaft rotational speed and the shaft standstill;
the first active sensor (215) and the second active sensor (218, 220) being set up to detect a reversal in the shaft rotational direction;
provision of information about the angular position of the first shaft (201) to a control device (208);
provision of information about the angular position of the second shaft (202) or the phase relation between the first shaft (201) and the second shaft (202) to the control device;
provision of a control signal for setting a predefinable phase difference between the first shaft (201) and the second shaft (202).

18. Method according to Claim 17, comprising, furthermore:
determination of an angular position of a third shaft (207) by means of a third sensor (212);
provision of information about the angular position of the third shaft (207) to the control device (208).

19. Method according to Claim 17 or 18, comprising, furthermore:
setting of the predefinable phase difference between the first shaft (201) and the second shaft (202) by means of an adjusting element.

20. Method according to one of Claims 17 to 19, comprising, furthermore:
maintaining of the predefinable phase difference between the first shaft (201) and the second shaft (202) by means of a phase-maintaining device.

21. Method according to one of Claims 17 to 20, comprising, furthermore:
setting of the phase difference between the first shaft (201) and the second shaft (202) in the case of an engine switchina-off operation.

22. Method according to one of Claims 17 to 21, comprising, furthermore:
activation of a synchronization apparatus at a rotational speed of the engine between a reference rotational speed of the engine and the standstill of the engine.

23. Method according to one of Claims 17 to 22, comprising, furthermore:
storage of a phase difference between the first shaft (201) and the second shaft (202).

24. Computer-readable storage medium, on which a program for synchronizing shafts in an engine during an engine starting phase or an engine stop phase is stored, which program controls the hollowing method steps when it is executed by a processor:
determination of an angular position of a first shaft (201) by means of a first active sensor (215);
determination of an angular position of a second shaft (202) by means of a second active sensor (218, 220); or
determination of a phase relation between the first shaft (201) and the second shaft (202);
the first active sensor (215) and the second active sensor (218, 220) being set up to detect a shaft rotational speed at least between a reference value for the shaft rotational speed and the shaft standstill;
the first active sensor (215) and the second active sensor (218, 220) being set up to detect a reversal in the shaft rotational direction;
provision of information about the angular position of the first shaft (201) to a control device (208);
provision of information about the angular position of the second shaft (202) or the phase relation between the first shaft (201) and the second shaft (202) to the control device;
provision of a control signal for setting a predefinable phase difference between the first shaft (201) and the second shaft (202).

25. Synchronization apparatus for a camshaft adjuster, comprising:
a control device (208);
an active adjusting-shaft relative sensor system;
the active adjusting-shaft relative sensor system being set up to provide the control device (208) with a phase relation between the first shaft (201, 202, 207) and the second shaft (201, 202, 207);
the active adjusting-shaft relative sensor system being set up to detect a shaft rotational speed at least between a reference value for the shaft rotational speed and the shaft standstill; and
the active adjusting-shaft relative sensor system being set up to detect a reversal in the shaft rotational direction;
the control device (208) being set up to provide a control signal for setting a predefinable phase difference between the first shaft (201, 202, 207) and the second shaft (201, 202, 207).

## Revendications

1. Dispositif de synchronisation pour un mécanisme de réglage d'arbre à cames, comprenant :
un dispositif de commande (208) ;
un premier capteur actif (215) pour déterminer une position angulaire d'un premier arbre (201) ;
un deuxième capteur actif (218, 220) pour déterminer une position angulaire d'un deuxième arbre (202) ou
pour déterminer une différence de phase entre le premier arbre (201) et le deuxième arbre (202) ;
le premier capteur actif (215) étant conçu pour fournir au dispositif de commande (208) des informations sur la position angulaire du premier arbre (201) ;
le deuxième capteur actif (218, 220) étant configuré pour fournir au dispositif de commande (208) des informations sur la position angulaire du deuxième arbre (202) ou sur la différence de phase entre le premier arbre (201) et le deuxième arbre (202) ;
le premier capteur actif (215) et le deuxième capteur actif (218, 220) étant conçus pour reconnaître une vitesse de rotation d'arbre au moins entre une valeur de référence de la vitesse de rotation d'arbre et
l'immobilisation de l'arbre ; et
le premier capteur actif (215) et le deuxième capteur actif (218, 220) étant conçus pour reconnaître une inversion du sens de rotation d'arbre ;
le dispositif de commande (208) étant conçu pour fournir un signal de commande destiné à régler une différence de phase pouvant être prédéterminée entre le premier arbre (201) et le deuxième arbre (202).

2. Dispositif de synchronisation selon la revendication 1, le premier capteur actif (215) et le deuxième capteur actif (218, 220) étant en outre conçus pour permettre une surveillance permanente de la position angulaire du premier arbre (201) et de la position angulaire du deuxième arbre (202) ou de la phase du deuxième arbre (202) pendant une phase d'arrêt d'une rotation du premier arbre (201) et du deuxième arbre (202).

3. Dispositif de synchronisation selon la revendication 1 ou 2, comprenant en outre :
un troisième capteur (212) pour déterminer une position angulaire d'un troisième arbre (207) ;
le troisième capteur (212) étant conçu pour fournir au dispositif de commande (208) des informations sur la position angulaire du troisième arbre (207).

4. Dispositif de synchronisation selon la revendication 3, le troisième capteur (212) étant un capteur actif.

5. Dispositif de synchronisation selon l'une des revendications 1 à 4, comprenant en outre :
un élément de positionnement ;
l'élément de positionnement étant couplé avec un troisième arbre (207) ; et
le troisième arbre (207) étant couplé de manière cinématique avec le premier arbre (201) et le deuxième arbre (202) ;
l'élément de positionnement étant conçu pour régler l'angle de phase pouvant être prédéterminé entre le premier arbre (201) et le deuxième arbre (202) en accélérant ou en freinant le troisième arbre (207).

6. Dispositif de synchronisation selon la revendication 5, l'élément de positionnement étant un moteur électrique.

7. Dispositif de synchronisation selon la revendication 5 ou 6, une arrivée d'énergie vers l'élément de positionnement pouvant être limitée de manière statique ou dynamique.

8. Dispositif de synchronisation selon l'une des revendications 5 à 7, l'élément de positionnement comprenant un capteur choisi dans le groupe composé du premier capteur actif (215), du deuxième capteur actif (218, 220) et du troisième capteur (212).

9. Dispositif de synchronisation selon l'une des revendications 1 à 8, comprenant en outre :
un dispositif de maintien de phase qui est conçu pour conserver la différence de phase pouvant être déterminée entre le premier arbre (201) et le deuxième arbre (202).

10. Dispositif de synchronisation selon l'une des revendications 5 à 9, l'élément de positionnement étant conçu pour régler une différence de phase entre le premier arbre (201) et le deuxième arbre (202) lors d'une opération d'arrêt du moteur.

11. Dispositif de synchronisation selon l'une des revendications 1 à 10, le dispositif de synchronisation étant configuré pour être activé lorsque la vitesse de rotation du moteur est comprise entre une vitesse de rotation de référence du moteur et l'arrêt du moteur.

12. Dispositif de synchronisation selon l'une des revendications 1 à 11, au moins l'un parmi le premier capteur actif (215), le deuxième capteur actif (218, 220) et le troisième capteur (212) étant réalisé sous la forme d'un capteur de champ magnétique.

13. Dispositif de synchronisation selon l'une des revendications 1 à 12, comprenant en outre :
un dispositif de mémorisation qui est conçu pour enregistrer une différence de phase entre le premier arbre (201) et le deuxième arbre (202) pendant un arrêt du moteur.

14. Dispositif de synchronisation selon l'une des revendications 1 à 13, comprenant en outre :
un capteur passif ;
le capteur passif étant disposé au moins sur le premier arbre (201) ou sur le deuxième arbre (202) en plus d'au moins le premier capteur actif (215) ou le deuxième capteur actif (218, 220).

15. Dispositif de synchronisation selon l'une des revendications 1 à 14, le dispositif de synchronisation étant conçu pour être utilisé dans un système de freinage.

16. Dispositif de synchronisation selon l'une des revendications 1 à 15, au moins l'un des capteurs choisi dans le groupe des capteurs composé du premier capteur actif (215), du deuxième capteur actif (218, 220) et du troisième capteur actif (212) étant intégré dans le mécanisme de réglage d'arbre à cames.

17. Procédé de synchronisation des arbres dans un moteur pendant une phase de démarrage du moteur ou une phase d'arrêt du moteur, comprenant :
Détermination d'une position angulaire d'un premier arbre (201) au moyen d'un premier capteur actif (215) ;
Détermination d'une position angulaire d'un deuxième arbre (202) au moyen d'un deuxième capteur actif (218, 220) ; ou
Détermination d'une différence de phase entre le premier arbre (201) et le deuxième arbre (202) ;
le premier capteur actif (215) et le deuxième capteur actif (218, 220) étant conçus pour reconnaître une vitesse de rotation d'arbre au moins entre une valeur de référence de la vitesse de rotation d'arbre et
l'immobilisation de l'arbre ;
le premier capteur actif (215) et le deuxième capteur actif (218, 220) étant conçus pour reconnaître une inversion du sens de rotation d'arbre ;
Fourniture d'informations sur la position angulaire du premier arbre (201) à un dispositif de commande (208) ;
Fourniture d'informations sur la position angulaire du deuxième arbre (202) ou sur la différence de phase entre le premier arbre (201) et le deuxième arbre (202) au dispositif de commande (208) ;
Fourniture d'un signal de commande destiné à régler une différence de phase pourant être prédéterminée entre le premier arbre (201) et le deuxième arbre (202).

18. Procédé selon la revendication 17, comprenant en outre :
Détermination d'une position angulaire d'un troisième arbre (207) au moyen d'un troisième capteur (212) ;
Fourniture d'informations sur la position angulaire du troisième arbre (207) au dispositif de commande (208).

19. Procédé selon la revendication 17 ou 18, comprenant en outre :
Réglage de la différence de phase pouvant être prédéterminée entre le premier arbre (201) et le deuxième arbre (202) au moyen d'un élément de positionnement.

20. Procédé selon l'une des revendications 17 à 19, comprenant en outre :
Conservation de la différence de phase pouvant être prédéterminée entre le premier arbre (201) et le deuxième arbre (202) au moyen d'un dispositif de maintien de phase.

21. Procédé selon l'une des revendications 17 à 20, comprenant en outre :
Réglage de la différence de phase entre le premier arbre (201) et le deuxième arbre (202) lors d'une opération d'arrêt du moteur.

22. Procédé selon l'une des revendications 17 à 21, comprenant en outre :
Activation du dispositif de synchronisation lorsque la vitesse de rotation du moteur est comprise entre une vitesse de rotation de référence du moteur et l'arrêt du moteur.

23. Procédé selon l'une des revendications 17 à 22, comprenant en outre :
Enregistrement d'une différence de phase entre le premier arbre (201) et le deuxième arbre (202).

24. Support d'enregistrement lisible sur ordinateur sur lequel est enregistré un programme de synchronisation des arbres dans un moteur pendant une phase de démarrage du moteur ou une phase d'arrêt du moteur, ledit programme, lorsqu'il est exécuté par un processeur, commande les étapes suivantes d'un Procédé :
Détermination d'une position angulaire d'un premier arbre (201) au moyen d'un premier capteur actif (215) ;
Détermination d'une position angulaire d'un deuxième arbre (202) au moyen d'un deuxième capteur actif (218, 220) ; ou
Détermination d'une différence de phase entre le premier arbre (201) et le deuxième arbre (202) ;
le premier capteur actif (215) et le deuxième capteur actif (218, 220) étant conçus pour reconnaître une vitesse de rotation d'arbre au moins entre une valeur de référence de la vitesse de rotation d'arbre et l'immobilisation de l'arbre ;
le premier capteur actif (215) et le deuxième capteur inversion du sens de rotation d'arbre ;
Fourniture d'informations sur la position angulaire du premier arbre (201) à un dispositif de commande (208) ; Fourniture d'informations sur la position angulaire du deuxième arbre (202) ou sur la différence de phase entre le premier arbre (201) et le deuxième arbre (202) au dispositif de commande (208) ;
Fourniture d'un signal de commande destiné à régler une différence de phase pourant être prédéterminée entre le premier arbre (201) et le deuxième arbre (202).

25. Dispositif de synchronisation pour un mécanisme de réglage d'arbre à cames, comprenant :
un dispositif de commande (208) ;
un dispositif actif de détection relative d'arbre de positionnement ;
le dispositif actif de détection relative d'arbre de positionnement étant conçu pour fournir au dispositif de commande (208) une différence de phase entre le premier arbre (201, 202, 207) et le deuxième arbre (201, 202, 207) ;
le dispositif actif de détection relative d'arbre de positionnement étant conçu pour reconnaître une vitesse de rotation d'arbre au moins entre une valeur de référence de la vitesse de rotation d'arbre et l'immobilisation de l'arbre ; et
le dispositif actif de détection relative d'arbre de positionnement étant conçu pour reconnaître une inversion du sens de rotation d'arbre ;
le dispositif de commande (208) étant conçu pour fournir un signal de commande destiné à régler une différence de phase pourant être prédéterminée entre le premier arbre (201, 202, 207) et le deuxième arbre (201, 202, 207).
